# EUROPEAN PATENT SPECIFICATION

(11) **EP 3 780 895 B1**
(45) Date of publication and mention of the grant of the patent: **14.06.2023**
(21) Application number: 20199236.9
(22) Date of filing: 21.06.2017
(51) Int. Cl.: H04W 84/12, H04W 74/08

(54) **STATION DEVICE, WIRELESS CONTROL METHOD AND PROGRAM**
STATIONSVORRICHTUNG, DRAHTLOSSTEUERUNGSVERFAHREN UND PROGRAMM
DISPOSITIF DE STATION, PROCÉDÉ DE COMMANDE SANS FIL ET PROGRAMME

(30) Priority: 05.09.2016 JP 2016172661
(43) Date of publication of application: 17.02.2021
(62) Divisional of application: 17845846.9
(73) Proprietor: Sony Group Corporation, Tokyo 108-0075 (JP)
(72) Inventor: Morioka, Yuichi, Tokyo, 1080075 (JP); Aio, Kosuke, Tokyo, 108-0075 (JP)
(74) Representative: Witte, Weller & Partner Patentanwälte mbB

(56) References cited:
- EP-A1- 3 024 295
- US-A1- 2016 142 980
- "High Efficiency (HE) MAC specification", IEEE DRAFT; TGAX_CL_25, IEEE-SA, PISCATAWAY, NJ USA , vol. 802.11ax drafts, no. D0.4 30 August 2016 (2016-08-30), pages 1-29, XP068137542, Retrieved from the Internet: URL:www.ieee802.org/11/private/Draft_Stand ards/11ax/TGax_Cl_25.rtf [retrieved on 2016-08-30]
- GEONJUNG KO (WILUS): "Issues on BSS Color Bits Collision ; 11-16-0396-00-00ax-issues-on-bss-color-bit s-collision", IEEE DRAFT; 11-16-0396-00-00AX-ISSUES-ON-BSS-COLOR-BIT S-COLLISION, IEEE-SA MENTOR, PISCATAWAY, NJ USA, vol. 802.11ax, 14 March 2016 (2016-03-14), pages 1-18, XP068105300,

## Description

### Technical Field

The present disclosure relates to a station device, a wireless control method, and a program.

### Background Art

In recent years, a working group of IEEE802.11, and the like have been considering standardization of a new wireless LAN, which includes consideration of a method for setting a transmission prohibition period (hereinafter referred to as "network allocation vector (NAV)" for convenience). For example, an NAV setting method based on a received frame, and the like have been under consideration.

Paragraph [0024] of JP 2014-123856A discloses a processing method based on reception power of a pilot signal.

US 2016/0142980 A1 discloses a method of transmitting a frame by a first device belonging to a first BSS in a wireless communication network. The first device determines whether an RTS frame or a CTS frame is received from a second 30 BSS that is a neighbor BSS of the first BSS. When the RTS frame or the CTS frame is received from the second BSS, the first device transmits to a second device a transmission frame whose transmission power is changed from a normal power during a predetermined time within a data frame transmission time and an ACK frame transmission time of the second BSS.

### Disclosure of Invention

### Technical Problem

In regard to NAV setting based on a received frame, for example, the following have been under consideration: determining, by a station device, whether or not a received frame is a signal transmitted from another device belonging to the same network as the own device, and deciding an NAV setting method in accordance with a result of the determination.

However, in a wireless LAN system, a station device cannot determine whether or not a response frame transmitted to another station device is a signal transmitted from another device belonging to the same network as the own device. For example, a reception preparation completion frame (hereinafter referred to as "clear to send (CTS)" for convenience), which is a type of response frame, does not include information regarding a transmitting station address; hence, in the case of receiving a CTS, the station device cannot determine whether or not the CTS is a signal transmitted from another device belonging to the same network as the own device.

Hence, in view of the above circumstances, the present disclosure provides a novel and improved station device, access point device, wireless control method, communication control method, and program that enable the station device to determine whether or not a response frame is a signal transmitted from another device belonging to the same network as the own device.

### Solution to Problem

The claimed subject matter is defined in the appended independent claims. Further refinements are provided in the dependent claims.

According to the present disclosure, there is provided a station device including: a communication unit configured to receive a response frame not including information indicating a transmission source; and a control unit configured to determine whether or not the response frame is a frame transmitted from another device belonging to a same network as the own device, on the basis of information regarding the response frame.

In addition, according to the present disclosure, there is provided a wireless control method executed by a computer, including: receiving a response frame; and determining whether or not the response frame is a frame transmitted from another device belonging to a same network as the own device, on the basis of information regarding the response frame.

In addition, according to the present disclosure, there is provided a program causing a computer to implement: receiving a response frame; and determining whether or not the response frame is a frame transmitted from another device belonging to a same network as the own device, on the basis of information regarding the response frame.

In addition, according to the present disclosure, there is provided an access point device including: a communication unit configured to receive a request frame from a station device that determines whether or not a received response frame is a frame transmitted from another device belonging to a same network as the own device on the basis of information regarding the response frame; and a control unit configured to generate the response frame corresponding to the request frame, and cause the communication unit to transmit the response frame.

In addition, according to the present disclosure, there is provided a communication control method executed by a computer, including: receiving a request frame from a station device that determines whether or not a received response frame is a frame transmitted from another device belonging to a same network as the own device on the basis of information regarding the response frame; and generating the response frame corresponding to the request frame, and causing the response frame to be transmitted.

In addition, according to the present disclosure, there is provided a program causing a computer to implement: receiving a request frame from a station device that determines whether or not a received response frame is a frame transmitted from another device belonging to a same network as the own device on the basis of information regarding the response frame; and generating the response frame corresponding to the request frame, and causing the response frame to be transmitted.

### Advantageous Effects of Invention

According to the present disclosure as described above, the station device can determine whether or not a response frame is a signal transmitted from another device belonging to the same network as the own device.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 illustrates a configuration of a wireless LAN system according to an embodiment of the present disclosure.
[FIG. 2] FIG. 2 illustrates a frame format of an RTS.
[FIG. 3] FIG. 3 illustrates a frame format of a CTS.
[FIG. 4] FIG. 4 illustrates communication control using one type of NAV
[FIG. 5] FIG. 5 illustrates communication control using two types of NAVs.
[FIG. 6] FIG. 6 illustrates a problem of the communication control using two types of NAVs.
[FIG. 7] FIG. 7 illustrates a problem of the communication control using two types of NAVs.
[FIG. 8] FIG. 8 illustrates a configuration of an STA according to an embodiment of the present disclosure.
[FIG. 9] FIG. 9 is a flowchart illustrating NAV setting operation by a first method.
[FIG. 10] FIG. 10 illustrates communication between an AP and an STA when an NAV is set by the first method.
[FIG. 11] FIG. 11 is a flowchart illustrating NAV setting operation by a second method.
[FIG. 12] FIG. 12 illustrates communication between an AP and an STA when an NAV is set by the second method.
[FIG. 13] FIG. 13 is a flowchart illustrating NAV setting operation by a third method.
[FIG. 14] FIG. 14 illustrates communication between an AP and an STA when an NAV is set by the third method.
[FIG. 15] FIG. 15 illustrates communication between an AP and an STA when an NAV is set by the third method.
[FIG. 16] FIG. 16 is a flowchart illustrating NAV setting operation by an STA supporting the first to third methods.
[FIG. 17] FIG. 17 illustrates communication between an AP and an STA when a predetermined threshold is set to a value higher than an appropriate value in the second method.
[FIG. 18] FIG. 18 illustrates a threshold decision example according to a first modification.
[FIG. 19] FIG. 19 is a flowchart illustrating NAV setting operation according to a second modification.
[FIG. 20] FIG. 20 is a flowchart illustrating operation when an STA receives a CF-End in the second modification.
[FIG. 21] According to the present invention, FIG. 21 illustrates communication between an AP and an STA according to the second modification.
[FIG. 22] FIG. 22 is a block diagram illustrating an example of a schematic configuration of a smartphone.
[FIG. 23] FIG. 23 is a block diagram illustrating an example of a schematic configuration of a car navigation device.
[FIG. 24] FIG. 24 is a block diagram illustrating an example of a schematic configuration of a wireless access point.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that description will be given in the following order.
1. Overview of wireless LAN system
2. Configuration of STA
3. Operation of STA
4. First modification
5. Second modification
6. Application examples
7. Conclusion

### <1. Overview of wireless LAN system>

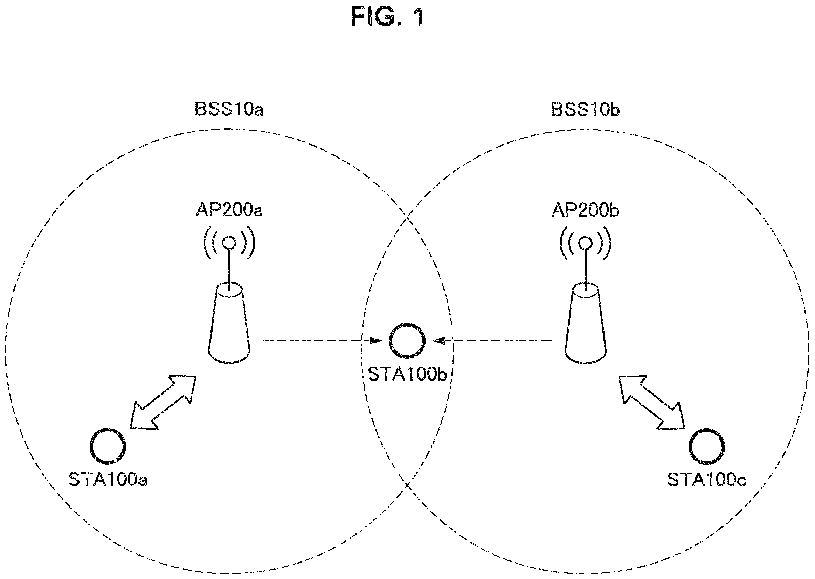

An embodiment of the present disclosure relates to a wireless LAN system. First, an overview of a wireless LAN system according to an embodiment of the present disclosure is described with reference to FIGS. 1 to 7.

### (1-1. Configuration of wireless LAN system)

FIG. 1 illustrates a configuration of a wireless LAN system according to an embodiment of the present disclosure. As illustrated in FIG. 1, the wireless LAN system according to an embodiment of the present disclosure includes access point devices (hereinafter referred to as "access point (AP)" for convenience) 200 and station devices (hereinafter referred to as "station (STA)" for convenience) 100. Then, one AP 200 and one or more STAs 100 constitute a basic service set (hereinafter referred to as "basic service set (BSS)" for convenience) 10.

The wireless LAN system according to an embodiment of the present disclosure may be installed in any place. For example, the wireless LAN system according to the present embodiment may be installed in office buildings, housing, commercial facilities, public facilities, or the like.

In addition, an area of the BSS 10 according to the present embodiment may overlap with an area of another BSS 10; in that case, a signal transmitted from the STA 100 located in the overlap area may interfere with a signal transmitted from the other BSS 10. When description is given using the example of FIG. 1, an area of the BSS 10a overlaps with part of an area of the BSS 10b, and a signal transmitted from the STA 100b located in the overlap area may interfere with a signal transmitted from the AP 200b of the BSS 10b.

The AP 200 according to the present embodiment is connected to an external network, and provides communication with the external network for the STA 100. For example, the AP 200 is connected to the Internet, and provides communication between the STA 100 and a device on the Internet or a device connected via the Internet.

The STA 100 according to the present embodiment is a wireless device that communicates with the AP 200. The STA 100 may be any wireless device. For example, the STA 100 may be a display with a display function, a memory with a storage function, a keyboard and a mouse with an input function, a speaker with a sound output function, or a smartphone with a function of executing advanced calculation processing.

### (1-2. Overview of wireless communication)

The configuration of the wireless LAN system according to the present embodiment has been described above. Now, an overview of wireless communication according to the present embodiment will be described. In the wireless LAN system according to the present embodiment, the AP 200 and the STA 100 communicate with each other. For example, the AP 200 that transmits data transmits a transmission request frame (hereinafter referred to as "request to send (RTS)" for convenience) 20 to the STA 100 before the data transmission. Then, the STA 100 that has received the RTS 20 transmits a CTS 30 to the AP 200 as a response frame to the RTS 20.

In the case where an STA 100 other than the STA 100 communicating the RTS 20 and the CTS 30 with the AP 200 receives the RTS 20 or the CTS 30, the STA 100 sets an NAV so as to prevent interference. The STA 100 that has set the NAV cannot transmit a signal during the set period.

Here, in a wireless LAN system, there are a method using one type of NAV and a method using a plurality of types of NAVs. A method is considered in which the STA 100 according to the present embodiment uses two types of NAVs, i.e., Intra-BSS NAV that is an NAV for communication in a BSS to which the own device belongs (hereinafter referred to as "intra-BSS" for convenience) and Regular NAV that is an NAV for communication in a BSS other than intra-BSS (hereinafter referred to as "another BSS" for convenience). The STA 100 sets Intra-BSS NAV in the case of determining that the RTS 20 or the CTS 30 is an intra-BSS signal, and sets Regular NAV in the case of determining that the RTS 20 or the CTS 30 is not an intra-BSS signal. Here, Intra-BSS NAV functions as a first transmission suppression period, and Regular NAV functions as a second transmission suppression period.

The AP 200 that has received the CTS 30 from the STA 100 determines that the STA 100 is able to receive a signal, and transmits data to the STA 100. In the case where the STA 100 can receive data correctly, the STA 100 transmits an ACK to the AP 200. The AP 200 that has received the ACK transmits a frame for making notification of the end of a contention-free period (hereinafter referred to as "contention free-end (CF-End)" for convenience; denoted by "CFE" in the drawing). In the case of receiving the CF-End, the STA 100 that has set an NAV cancels the NAV. Note that in a scheme adopting a plurality of NAVs, the STA 100 cancels Intra-BSS NAV in the case of determining that the CF-End is an intra-BSS signal, and cancels Regular NAV in the case of determining that the CF-End is not an intra-BSS signal.

The above is the overview of a series of processes in communication between the AP 200 and the STA 100. Described above is an overview of processing when the AP 200 transmits data to the STA 100, and the device on the transmission side and the device on the reception side are reversed in the case where the STA 100 transmits data to the AP 200.

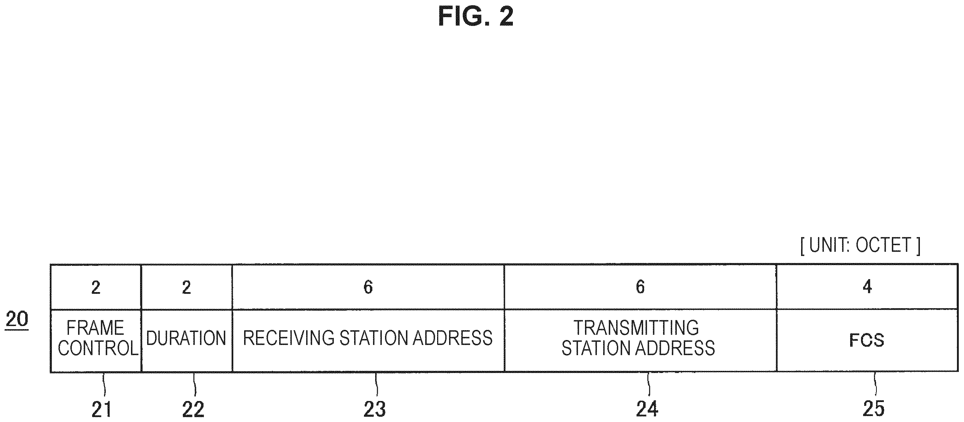

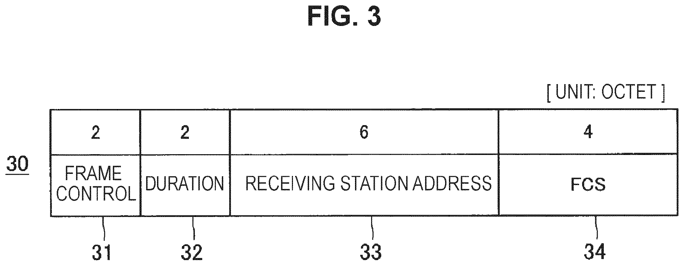

Then, frame formats of the RTS 20 and the CTS 30 communicated by the AP 200 and the STA 100 are described with reference to FIGS. 2 and 3. FIG. 2 illustrates a frame format of the RTS 20. As illustrated in FIG. 2, the RTS 20 includes information regarding frame control 21, duration 22, a receiving station address 23, a transmitting station address 24, and a frame check sequence (FCS) 25.

A device that has received the RTS 20 determines whether or not the own device is a target device of the RTS 20 on the basis of the receiving station address 23, and specifies a transmission source device of the RTS 20 on the basis of the transmitting station address 24. Here, it is assumed that the STA 100 knows address information of the AP 200 in intra-BSS, and does not know address information of the STA 100 other than the own device in intra-BSS. Consequently, in the case of receiving the RTS 20 from the AP 200, the STA 100 can determine that the RTS 20 is an intra-BSS signal on the basis of the fact that the address of the AP 200 is set in the transmitting station address 24 of the RTS 20.

In addition, although not illustrated, the CF-End also has a frame format similar to that of the RTS 20. More specifically, like the RTS 20, the CF-End includes information regarding frame control, duration, a receiving station address, a transmitting station address, and an FCS. The CF-End differs from the RTS 20 in that information regarding duration of the CF-End is 0 and the receiving station address is a broadcast address (FF:FF:FF:FF:FF:FF). A device that has received the CF-End specifies a transmission source device of the CF-End on the basis of the transmitting station address. In the case of receiving the CF-End from the AP 200, the STA 100 can determine that the CF-End is an intra-BSS signal on the basis of the fact that the address of the AP 200 is set in the transmitting station address of the CF-End.

FIG. 3 illustrates a frame format of the CTS 30. As illustrated in FIG. 3, the CTS 30 includes information regarding frame control 31, duration 32, a receiving station address 33, and a frame check sequence (FCS) 34, but, unlike the RTS 20, does not include information regarding a transmitting station address. In addition, although not illustrated, the ACK also has a frame format similar to that of the CTS 30.

### (1-3. Background)

The overview of wireless communication according to the present embodiment has been described above. Now, the background of the present disclosure will be described.

As described above, the STA 100 sets an NAV on the basis of reception of the RTS 20 or the CTS 30. More specifically, the STA 100 sets Intra-BSS NAV in the case of determining that the RTS 20 or the CTS 30 is an intra-BSS signal, and sets Regular NAV in the case of determining that the RTS 20 or the CTS 30 is not an intra-BSS signal.

Here, as described above, the CTS 30 does not include information regarding a transmitting station address. Consequently, for the STA 100 to determine whether or not the CTS 30 is an intra-BSS signal and set an NAV, the STA 100 is required to determine whether or not the CTS 30 is an intra-BSS signal on the basis of information other than the transmitting station address. If the STA 100 cannot determine whether or not the CTS 30 is an intra-BSS signal, Regular NAV will be set or updated, which may cause wasted time or cause interference.

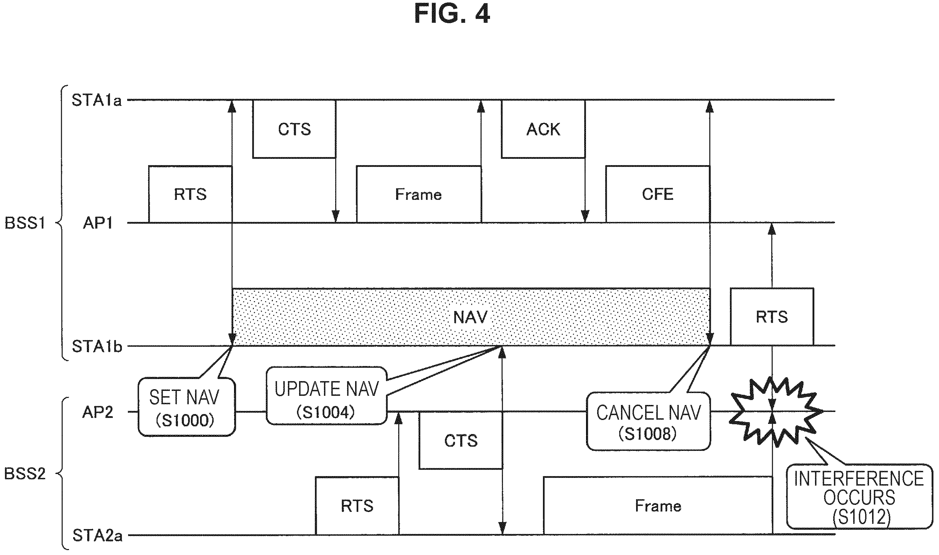

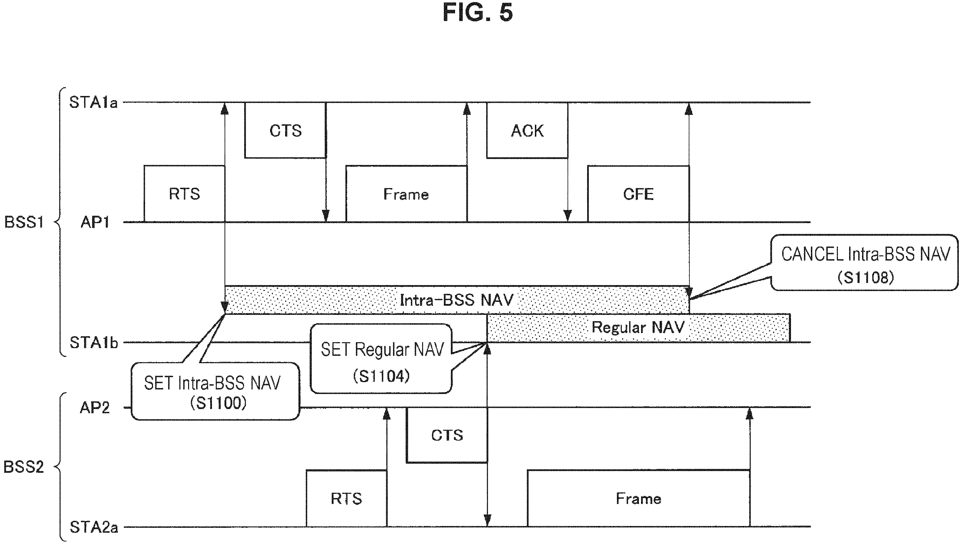

Now, communication between the AP and the STA when one type of NAV is used will be described with reference to FIG. 4, and then, a case where wasted time occurs or interference occurs in the case where two types of NAVs are used will be described with reference to FIGS. 5 to 7.

FIG. 4 illustrates communication control using one type of NAV. As illustrated in FIG. 4, the following case is assumed: an area of a BSS 1 overlaps with part of an area of a BSS 2, and an STA 1b belonging to the BSS 1 is located in the overlap area. That is, the STA 1b receives a signal from both an AP 1 and an AP 2.

In step S1000 of FIG. 4, the STA 1b that has received an RTS from the AP 1 sets an NAV on the basis of duration information included in the RTS. In step S1004, the AP 2 that has received an RTS from the STA 2a transmits a CTS. In this case, not only the STA 2a but also STA 1b receives the CTS, and the STA 1b updates the NAV.

After communication between the AP 1 and the STA 1a is completed, the AP 1 transmits a CF-End. In step S1008, the STA 1b that has received the CF-End from the AP 1 cancels the NAV. In step S1012, interference may occur between an RTS transmitted by the STA 1b to perform data transmission after the NAV cancellation and a data frame transmitted by the STA 2a.

In addition to the communication control using one type of NAV illustrated in FIG. 4, communication control using two types of NAVs is considered as illustrated in FIG. 5. FIG. 5 illustrates communication control using two types of NAVs. As illustrated in FIG. 5, the STA can set Intra-BSS NAV and Regular NAV.

First, in step S 1100 of FIG. 5, the STA 1b that has received an RTS from the AP 1 confirms that the RTS is an intra-BSS signal, and sets Intra-BSS NAV on the basis of duration information included in the RTS. In step S1104, the AP 2 that has received an RTS from the STA 2a transmits a CTS. In this case, not only the STA 2a but also the STA 1b receives the CTS, and the STA 1b sets Regular NAV because it cannot determine whether or not the CTS is an intra-BSS signal. Then, in step S1108, the STA 1b that has received a CF-End from the AP 1 confirms that the CF-End is an intra-BSS signal, and cancels Intra-BSS NAV. Then, although not illustrated, for example, the AP 2 transmits a CF-End in the BSS 2, and the STA 1b that has received the CF-End confirms that the CF-End is not an intra-BSS signal, and cancels Regular NAV.

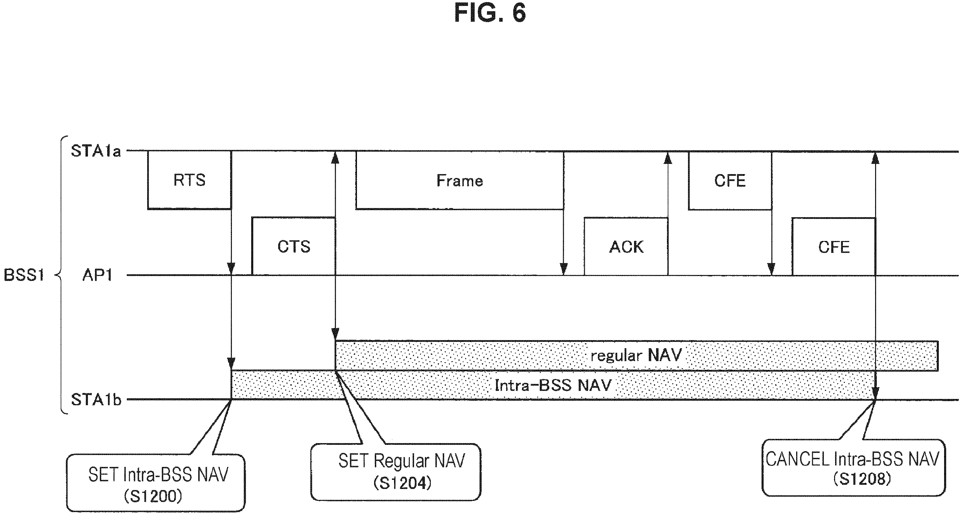

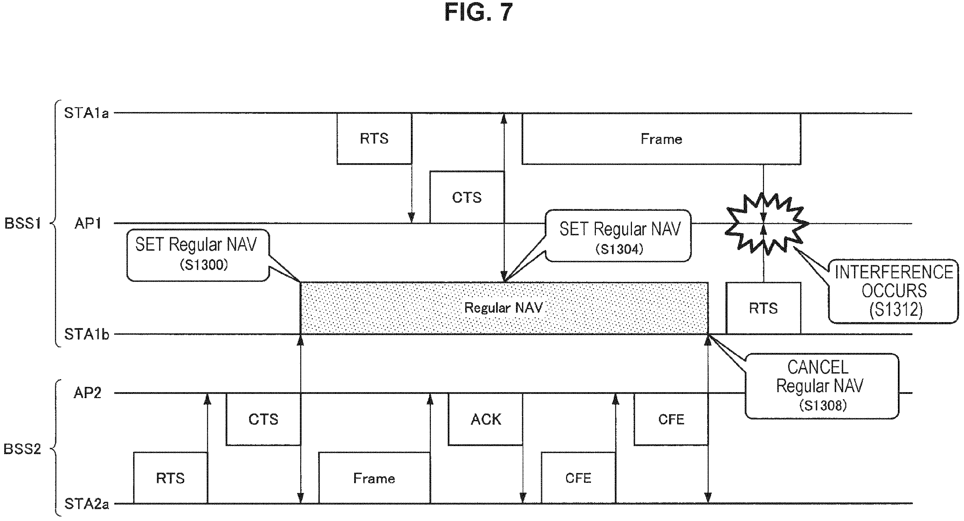

Then, a problem of the communication control using two types of NAVs is specifically described with reference to FIGS. 6 and 7. FIG. 6 illustrates a problem of the communication control using two types of NAVs.

First, in step S1200 of FIG. 6, the STA 1b that has received an RTS from the STA 1a sets Intra-BSS NAV on the basis of duration information included in the RTS. In step S1204, the AP 1 that has received the RTS from the STA 1a transmits a CTS. Then, the STA 1b that has received the CTS from the AP 1 sets Regular NAV on the basis of duration information included in the CTS, instead of updating Intra-BSS NAV, because it cannot grasp that the CTS is a signal transmitted from the BSS 1. After that, in step S1208, the STA 1b that has received a CF-End from the AP 1 cancels Intra-BSS NAV. Here, Regular NAV is kept being set until a period designated by the duration information included in the CTS ends, and the STA 1b cannot transmit a signal during that time. Thus, in a method using two types of NAVs, Regular NAV is set even in the case where communication by another BSS does not occur, which may cause wasted waiting time.

Now, FIG. 7 will be described. FIG. 7 illustrates a problem of the communication control using two types of NAVs. First, in step S1300 of FIG. 7, the AP 2 that has received an RTS from the STA 2a transmits a CTS. The STA 1b that has received the CTS from the AP 2 sets Regular NAV on the basis of duration information included in the CTS. In step S1304, the AP 1 that has received an RTS from the STA 1a transmits a CTS. Then, the STA 1b that has received the CTS from the AP 1 updates Regular NAV, instead of setting Intra-BSS NAV, because it cannot grasp that the CTS is a signal transmitted from intra-BSS. In step S1308, the STA 1b that has received a CF-End from the AP 2 cancels Regular NAV. After that, in step S1312, interference may occur between an RTS transmitted by the STA 1b to perform data transmission after the Regular NAV cancellation and a data frame transmitted by the STA 1a.

Hence, the disclosing party of the present case has devised the present disclosure by focusing on the above circumstances. The STA 100 of the wireless LAN system according to an embodiment of the present disclosure can determine whether or not the CTS 30, which is a type of response frame, is a signal transmitted from intra-BSS. In addition, the following description mainly describes processing related to the CTS 30, but the STA 100 can also determine whether or not an ACK, which is a type of response frame, is a signal transmitted from intra-BSS by a method similar to that of the CTS 30. In addition, the STA 100 according to the present embodiment can reduce influence on communication performance even in the case where whether or not the CTS 30 is a signal transmitted from intra-BSS is determined wrongly. Note that the STA 100 and the AP 200 according to the present embodiment has compatibility with an STA and an AP using a conventional method. For example, an STA and an AP using a conventional method can receive a frame transmitted by the STA 100 and the AP 200 according to the present embodiment, and appropriately process the frame on the basis of the conventional method. In addition, the STA 100 and the AP 200 according to the present embodiment can receive a frame transmitted by an STA and an AP using a conventional method, and appropriately process the frame.

### <2. Configuration of STA>

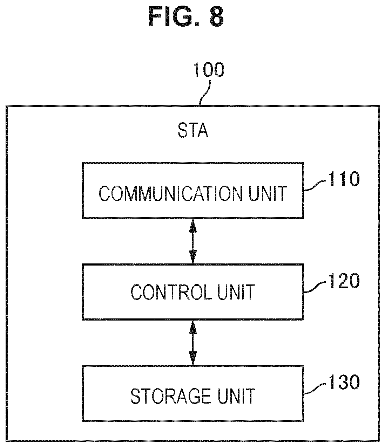

The background of the present disclosure has been described above. Now, a configuration of the STA 100 according to the present embodiment will be described with reference to FIG. 8. In addition, although not illustrated, the AP 200 according to the present embodiment may have a configuration similar to that of the STA 100.

FIG. 8 illustrates a configuration of the STA 100 according to an embodiment of the present disclosure. As illustrated in FIG. 8, the STA 100 includes a communication unit 110, a control unit 120, and a storage unit 130.

### (Communication unit)

The communication unit 110 performs processing of transmitting and receiving signals. Reception processing is described more specifically. The communication unit 110 receives a signal via an antenna, and performs analog processing and down-conversion on the signal, thereby outputting a baseband reception signal. Then, the communication unit 110 calculates correlation between one or two or more signal patterns and the reception signal, while shifting the reception signal that is a target of computation on a time axis, and detects a preamble on the basis of appearance of a peak of correlation. Thus, the communication unit 110 can detect the RTS 20, the CTS 30, a data frame, an ACK, a CF-End, or the like. In addition, the communication unit 110 performs demodulation, decoding, and the like on the baseband reception signal, thereby acquiring a frame, and provides the acquired frame to the control unit 120. In addition, the communication unit 110 measures signal reception power, and provides information regarding the reception power to the control unit 120.

Transmission processing is described more specifically. The communication unit 110 generates a signal to be transmitted on the basis of control by the control unit 120. For example, the communication unit 110 is provided with a frame from the control unit 120 and has coding and modulation schemes and the like designated, to perform encoding, interleaving, and modulation, thereby generating a baseband transmission signal. In addition, the communication unit 110 performs up-conversion on the baseband transmission signal obtained by the preceding processing, and transmits the signal via an antenna.

### (Control unit)

The control unit 120 performs control related to setting and cancellation of an NAV, and control related to transmission and reception of data. Control related to setting and cancellation of an NAV is described more specifically. In the case where the RTS 20 is received, in the case where one of the receiving station address 23 information and the transmitting station address 24 information of the RTS 20 includes the address of the AP 200, the control unit 120 determines that the RTS 20 is a signal transmitted from intra-BSS. In the case where one of the receiving station address 23 information and the transmitting station address 24 information of the RTS 20 does not include the address of the AP 200, the control unit 120 determines that the RTS 20 is not an intra-BSS signal. When determining that the RTS 20 is a signal transmitted from intra-BSS, the control unit 120 sets Intra-BSS NAV on the basis of the duration 22 information of the RTS 20. On the other hand, when determining that the RTS 20 is not a signal transmitted from intra-BSS, the control unit 120 sets Regular NAV on the basis of the duration 22 information of the RTS 20.

In addition, in the case where the CTS 30 is received, the control unit 120 determines whether or not the CTS 30 is a signal transmitted from intra-BSS on the basis of the receiving station address 33 information or reception power of the CTS 30. The control unit 120 according to the present embodiment performs the determination by using three types of methods (first to third methods). Details of the three types of methods are described in "3. Operation of device". Then, as with the RTS 20, when determining that the CTS 30 is a signal transmitted from intra-BSS, the control unit 120 sets Intra-BSS NAV on the basis of the duration 32 information of the CTS 30. In addition, as with the RTS 20, when determining that the CTS 30 is not a signal transmitted from intra-BSS, the control unit 120 sets Regular NAV on the basis of the duration 32 information of the CTS 30.

In addition, the control unit 120, in the case where a CF-End is received, the control unit 120 determines that the CF-End is a signal transmitted from intra-BSS in the case where the transmitting station address information of the CF-End includes the address of the AP 200. The control unit 120 determines that the CF-End is not an intra-BSS signal in the case where the transmitting station address information of the CF-End does not include the address of the AP 200. When determining that the CF-End is a signal transmitted from intra-BSS, the control unit 120 cancels Intra-BSS NAV. On the other hand, when determining that the CF-End is not a signal transmitted from intra-BSS, the control unit 120 cancels Regular NAV.

Control related to transmission and reception of data is described more specifically. In the case where data is transmitted, the control unit 120 generates the RTS 20 in a manner that the receiving station address 23 information includes an address of a data transmission destination device, and causes the communication unit 110 to transmit the RTS 20. Then, in the case where the communication unit 110 receives the CTS 30 in which the receiving station address 33 information includes an address of the own device, the control unit 120 generates a frame including transmission data, and causes the communication unit 110 to transmit the frame. After that, in the case where the communication unit 110 receives an ACK indicating that a frame is normally received, the control unit 120 generates a CF-End, and causes the communication unit 110 to transmit the CF-End.

In addition, in the case where data is received, in the case where the communication unit 110 receives the RTS 20, the control unit 120 generates the CTS 30, and causes the communication unit 110 to transmit the CTS 30. Then, in the case where the communication unit 110 normally receives a data frame, the communication unit 110 generates an ACK, and causes the communication unit 110 to transmit the ACK. After that, the control unit 120 generates a CF-End, and causes the communication unit 110 to transmit the CF-End.

### (Storage unit)

The storage unit 130 stores various types of information. More specifically, the storage unit 130 stores information included in the RTS 20, the CTS 30, a data frame, an ACK, a CF-End, or the like received by the communication unit 110, stores various data to be transmitted by the communication unit 110, and stores information regarding addresses of the own device and the AP 200.

### <3. Operation of STA>

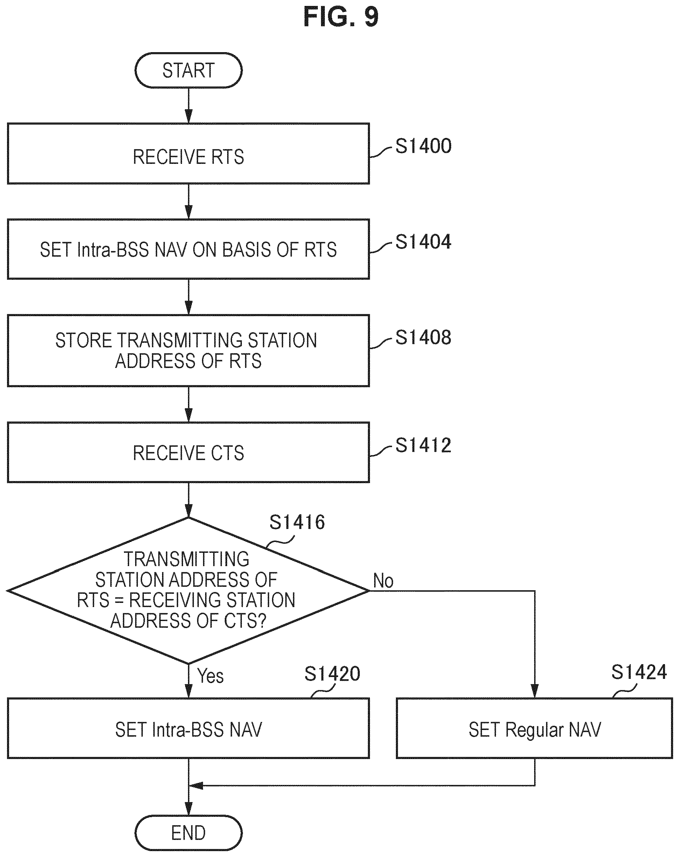

The configuration of the STA 100 according to the present embodiment has been described above. As described above, the control unit 120 of the STA 100 determines whether or not the CTS 30 is a signal transmitted from intra-BSS by using three types of methods (first to third methods). Now, operation of the STA 100 in the first to third methods will be described with reference to FIGS. 9 to 18. The STA 100 may support only one of the first to third methods, or may support a plurality of methods.

### (3-1. Operation of STA supporting first method)

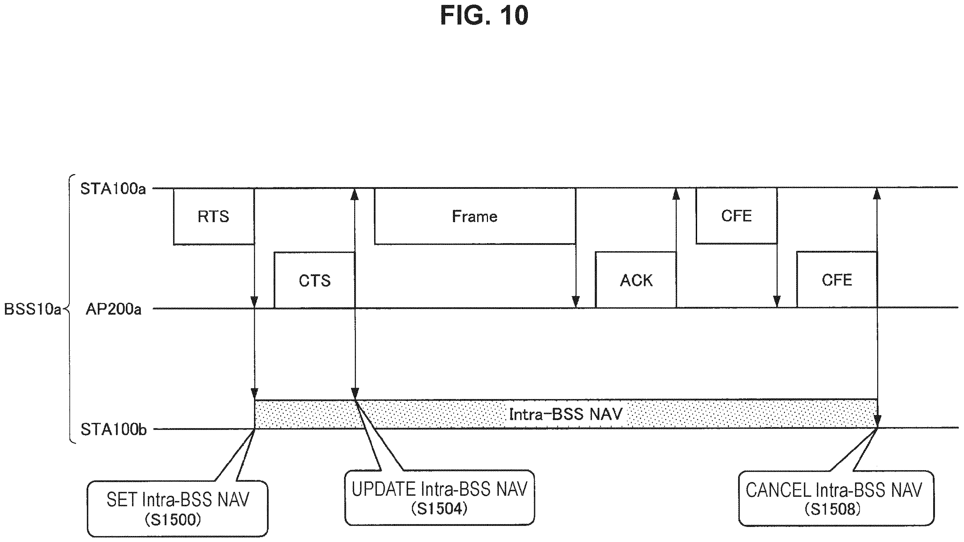

First, operation of the STA 100 in the first method is described with reference to FIGS. 9 and 10.

FIG. 9 is a flowchart illustrating NAV setting operation by the first method. In step S1400, the communication unit 110 receives the RTS 20. In step S1404, the control unit 120 sets Intra-BSS NAV on the basis of the fact that one of the receiving station address 23 information and the transmitting station address 24 information of the RTS 20 includes the address of the intra-BSS AP 200. In step S1408, the control unit 120 causes the storage unit 130 to store the transmitting station address 24 information of the RTS 20.

After that, in the case where the communication unit 110 receives the CTS 30 in step S1412, in step S1416, the control unit 120 compares the stored transmitting station address 24 information of the RTS 20 and the receiving station address 33 information of the CTS 30. In the case where the transmitting station address 24 information of the RTS 20 and the receiving station address 33 information of the CTS 30 are the same (Yes in step S1416), the control unit 120 can specify that the CTS 30 is a signal transmitted from intra-BSS. Consequently, the control unit 120 sets Intra-BSS NAV in step S1420, and processing ends.

In the case where the transmitting station address 24 information of the RTS 20 and the receiving station address 33 information of the CTS 30 are not the same in step S1416 (No in step S1416), the control unit 120 can specify that the CTS 30 is not an intra-BSS signal. Consequently, the control unit 120 sets Regular NAV in step S1424, and processing ends.

FIG. 10 illustrates communication between the AP 200 and the STA 100 when an NAV is set by the first method. In step S1500, the STA 100b that has received the RTS 20 from the STA 100a sets Intra-BSS NAV on the basis of duration information included in the RTS 20. In step S1504, the STA 100b that has received the CTS 30 from the AP 200a confirms that the transmitting station address 24 information of the RTS 20 and the receiving station address 33 information of the CTS 30 are the same, and updates Intra-BSS NAV. After that, the STA 100b receives a CF-End from the AP 200a in step S1508, and cancels Intra-BSS NAV.

In this manner, the STA 100 can determine whether or not the CTS 30 is a signal transmitted from intra-BSS by comparing the receiving station address 33 of the CTS 30 with the transmitting station address 24 of the RTS 20. In addition, the STA 100 has compatibility with an STA using a conventional method, because a frame format used in the conventional method is not changed.

### (3-2. Operation of STA supporting second method)

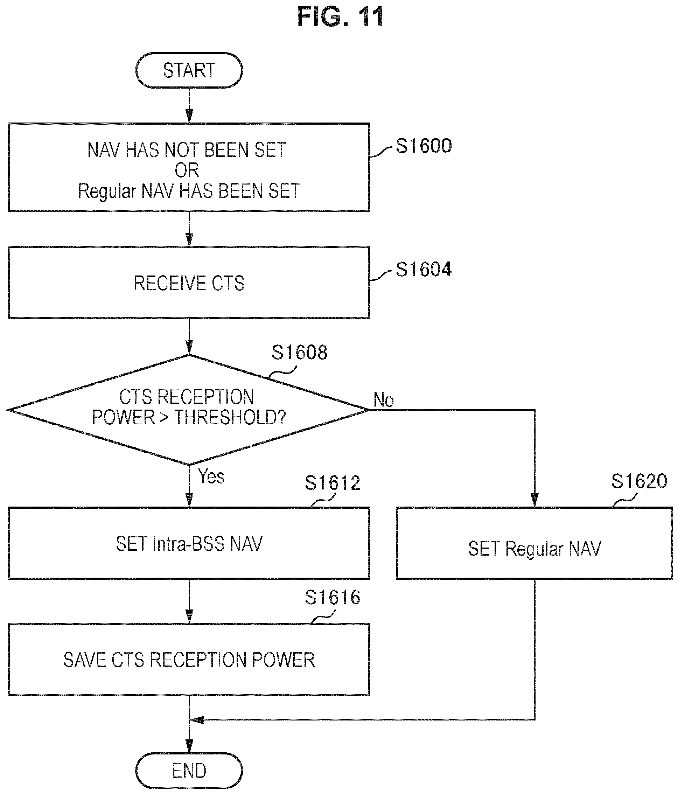

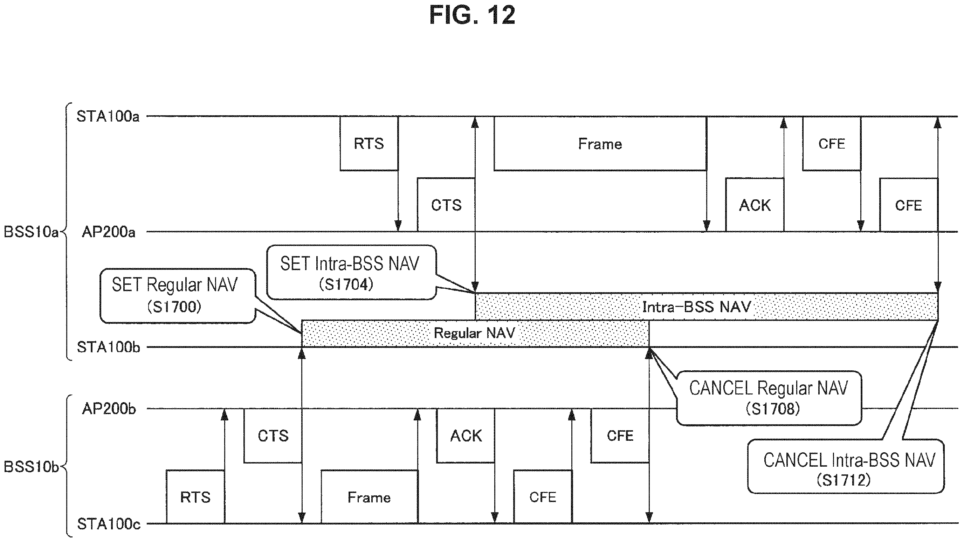

Then, operation of the STA 100 in the second method is described with reference to FIGS. 11 and 12.

FIG. 11 is a flowchart illustrating NAV setting operation by the second method. As illustrated in step S1600, the second method may be used in the case where neither Intra-BSS NAV nor Regular NAV is set in the STA 100, or in the case where only Regular NAV is set.

In step S1604, in the case where the communication unit 110 receives the CTS 30, the communication unit 110 measures reception power of the CTS 30. In step S1608, the control unit 120 compares the reception power of the CTS 30 with a predetermined threshold. In the case where the reception power of the CTS 30 is greater than the predetermined threshold (Yes in step S1608), the control unit 120 determines that the CTS 30 is a signal transmitted from intra-BSS, and sets Intra-BSS NAV in step S1612. In step S1616, the control unit 120 causes the storage unit 130 to store the reception power information of the CTS 30, and processing ends.

In the case where the reception power of the CTS 30 is equal to or less than the predetermined threshold in step S1608 (No in step S1608), the control unit 120 determines that the CTS 30 is not a signal transmitted from intra-BSS and sets Regular NAV in step S1620, and processing ends.

FIG. 12 illustrates communication between the AP 200 and the STA 100 when an NAV is set by the second method. In step S1700, the STA 100b that has received the CTS 30 from the AP 200b confirms that reception power of the CTS 30 is equal to or less than a predetermined threshold, and sets Regular NAV. In step S1704, the STA 100b that has received the CTS 30 from the AP 200a confirms that reception power of the CTS 30 is greater than the predetermined threshold, and sets Intra-BSS NAV. After that, the STA 100b receives a CF-End from the AP 200b in step S1708, and cancels Regular NAV. Then, the STA 100b receives a CF-End from the AP 200a in step S1712, and cancels Intra-BSS NAV.

In this manner, the STA 100 can determine whether or not the CTS 30 is a signal transmitted from intra-BSS by setting an appropriate value as a predetermined threshold, and comparing reception power of the CTS 30 with the threshold. In addition, the STA 100 has compatibility with an STA using a conventional method, because a frame format used in the conventional method is not changed.

### (3-3. Operation of STA supporting third method)

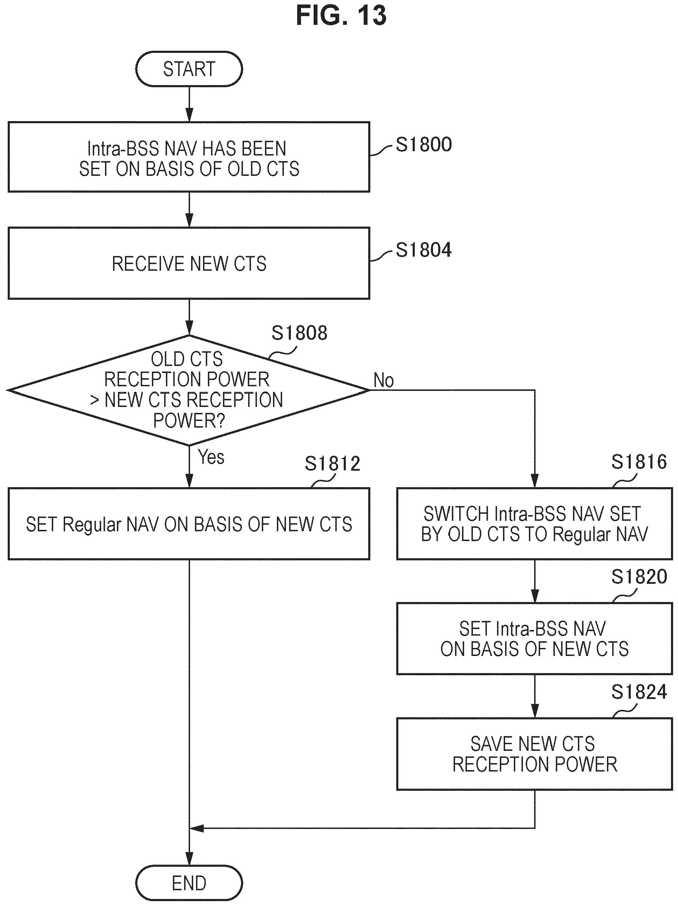

Then, operation of the STA 100 in the third method is described with reference to FIGS. 13 to 15.

FIG. 13 is a flowchart illustrating NAV setting operation by the third method. As illustrated in step S1800, the third method may be used in the case where Intra-BSS NAV was set by using the second method when the STA 100 received the CTS (hereinafter, referred to as "old CTS" for convenience) 30 in the past. Note that it is assumed that the communication unit 110 measured reception power of the old CTS 30 when the old CTS 30 was received, and the storage unit 130 stores information of the reception power.

In step S1804, in the case where the communication unit 110 receives the CTS (hereinafter, referred to as "new CTS" for convenience) 30, the communication unit 110 measures reception power of the new CTS 30. In step S1808, the control unit 120 compares the reception power of the old CTS 30 with the reception power of the new CTS 30. In the case where the reception power of the old CTS 30 is greater than the reception power of the new CTS 30 (Yes in step S1808), the control unit 120 determines that the new CTS 30 is not an intra-BSS signal and sets Regular NAV on the basis of the new CTS 30 in step S1812, and processing ends.

In the case where the reception power of the old CTS 30 is equal to or less than the reception power of the new CTS 30 in step S1808 (No in step S1808), the control unit 120 determines that determination of a source of the old CTS 30 was wrong. Then, the control unit 120 switches Intra-BSS NAV set by the old CTS 30 to Regular NAV in step S1816, and sets Intra-BSS NAV on the basis of the new CTS 30 in step S1820. After that, the control unit 120 causes the storage unit 130 to store the reception power information of the new CTS 30, and processing ends.

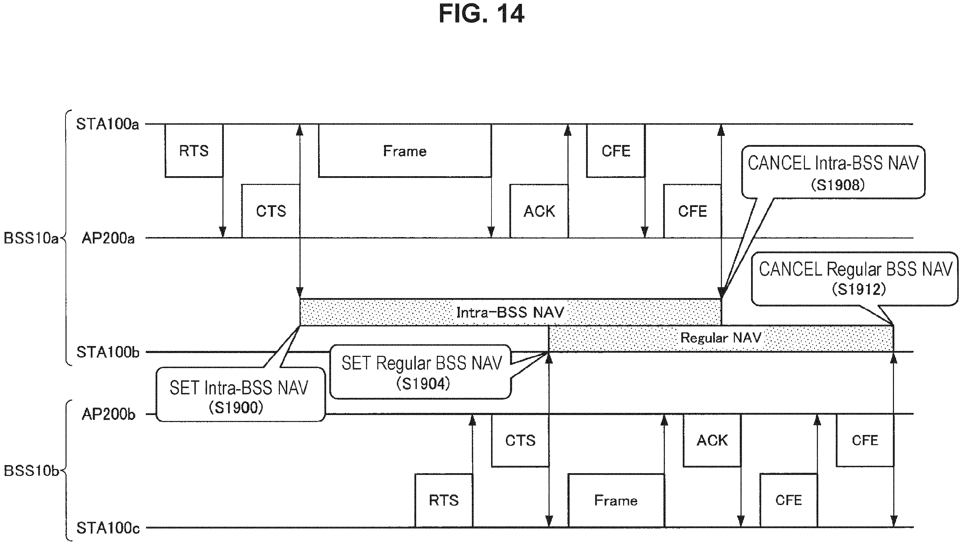

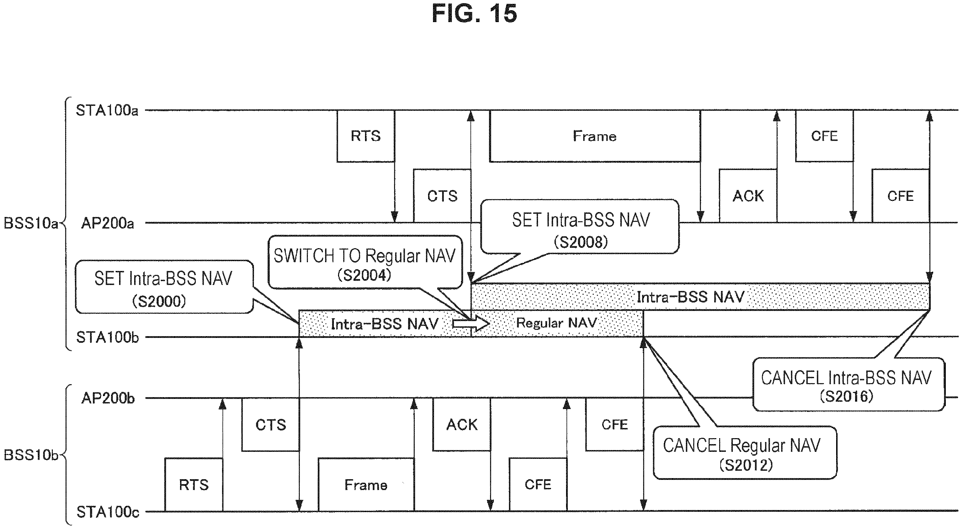

FIGS. 14 and 15 illustrate communication between the AP 200 and the STA 100 when an NAV is set by the third method. More specifically, FIG. 14 illustrates communication between the AP 200 and the STA 100 when the reception power of the old CTS 30 is greater than the reception power of the new CTS 30 in step S1808 of FIG. 15 (Yes in step S1808). In addition, FIG. 15 illustrates communication between the AP 200 and the STA 100 when the reception power of the old CTS 30 is equal to or less than the reception power of the new CTS 30 in step S1808 of FIG. 13 (No in step S1808).

In step S1900 of FIG. 14, the STA 100b that has received the old CTS 30 from the AP 200a confirms that reception power of the old CTS 30 is greater than a predetermined threshold, and sets Intra-BSS NAV. After that, in step S1904, the STA 100b that has received the new CTS 30 from the AP 200b confirms that the reception power of the old CTS 30 is greater than the reception power of the new CTS 30, and sets Regular NAV on the basis of the new CTS 30. After that, the STA 100b receives a CF-End from the AP 200a in step S1908, and cancels Intra-BSS NAV. Then, the STA 100b receives a CF-End from the AP 200b in step S1912, and cancels Regular NAV.

In step S2000 of FIG. 15, the STA 100b that has received the old CTS 30 from the AP 200b confirms that reception power of the old CTS 30 is greater than a predetermined threshold, and sets Intra-BSS NAV. After that, in step S2004, the STA 100b that has received the new CTS 30 from the AP 200a confirms that the reception power of the old CTS 30 is equal to or less than the reception power of the new CTS 30, and switches Intra-BSS NAV set by the old CTS 30 to Regular NAV. Then, in step S2008, the STA 100b sets Intra-BSS NAV on the basis of the new CTS 30. After that, the STA 100b receives a CF-End from the AP 200b in step S2012, and cancels Regular NAV. Then, the STA 100b receives a CF-End from the AP 200a in step S2016, and cancels Intra-BSS NAV.

In this manner, the STA 100 can determine which of the old CTS 30 and the new CTS 30 is a signal transmitted from intra-BSS by comparing reception power of the old CTS 30 with reception power of the new CTS 30. Even if a wrong determination is made that the old CTS 30 is a signal transmitted from intra-BSS, the STA 100 can recognize the wrong determination and correct NAV setting in the case of receiving the new CTS 30. In addition, the STA 100 has compatibility with an STA using a conventional method, because a frame format used in the conventional method is not changed.

### (3-4. Operation of STA supporting first to third methods)

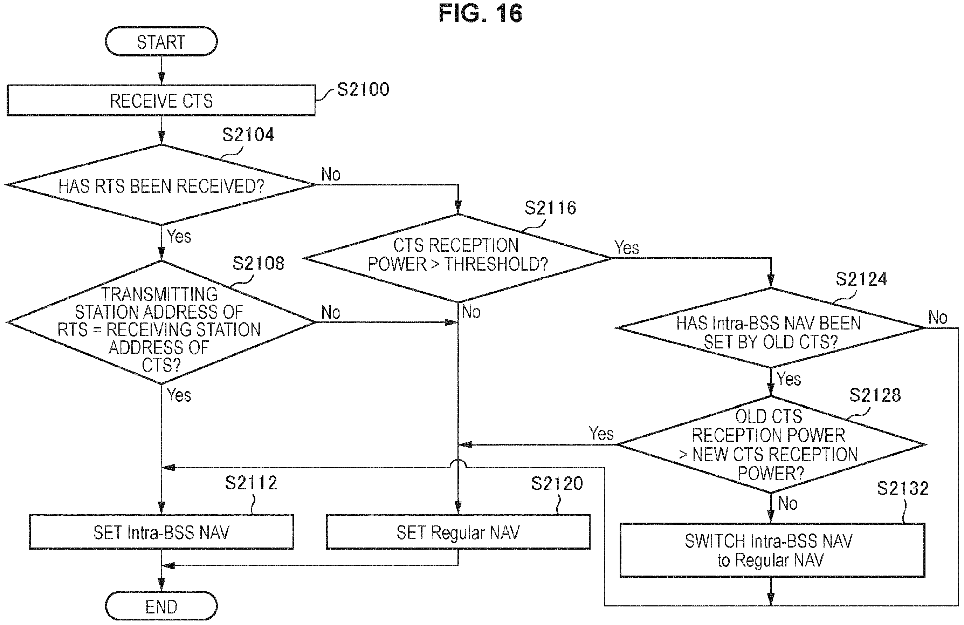

As described above, the STA 100 may support only one of the first to third methods, or may support a plurality of methods. Hence, operation of the STA 100 supporting all of the first to third methods is described below with reference to FIG. 16. FIG. 16 is a flowchart illustrating NAV setting operation by the STA 100 supporting the first to third methods.

First, in step S2100, the communication unit 110 receives the CTS 30. Then, in the case where the communication unit 110 has already received the RTS 20 in step S2104 (Yes in step S2104), in step S2108, the control unit 120 compares the transmitting station address 24 information of the RTS 20 and the receiving station address 33 information of the CTS 30 as in the first method. In the case where the transmitting station address 24 information of the RTS 20 and the receiving station address 33 information of the CTS 30 are the same (Yes in step S2108), the control unit 120 determines that the CTS 30 is a signal transmitted from intra-BSS. Consequently, the control unit 120 sets Intra-BSS NAV in step S2112, and processing ends.

In the case where the communication unit 110 has not received the RTS 20 yet in step S2104 (No in step S2104), in step S2116, the control unit 120 compares the reception power of the CTS 30 with a predetermined threshold as in the second method. In the case where the reception power of the CTS 30 is equal to or less than the predetermined threshold (No in step S2116), the control unit 120 determines that the CTS 30 is not an intra-BSS signal and sets Regular NAV in step S2120, and processing ends.

In the case where the reception power of the CTS 30 is greater than the predetermined threshold (Yes in step S2116) and Intra-BSS NAV is set on the basis of the old CTS 30 (Yes in step S2124), in step S2128, the control unit 120 compares the reception power of the old CTS 30 with the reception power of the new CTS 30 as in the third method. In the case where the reception power of the old CTS 30 is greater than the reception power of the new CTS 30 (Yes in step S2128), the control unit 120 determines that the new CTS 30 is not a signal transmitted from intra-BSS and sets Regular NAV on the basis of the new CTS 30 in step S2120, and processing ends.

In the case where the reception power of the old CTS 30 is equal to or less than the reception power of the new CTS 30 in step S2128 (No in step S2128), the control unit 120 determines that determination of a source of the old CTS 30 was wrong. Then, the control unit 120 switches Intra-BSS NAV set by the old CTS 30 to Regular NAV in step S2132 and sets Intra-BSS NAV on the basis of the new CTS 30 in step S2112, and processing ends. In addition, in the case where Intra-BSS NAV is not set on the basis of the old CTS 30 in step S2124 (No in step S2124), the control unit 120 determines that the CTS 30 is a signal transmitted from intra-BSS. Consequently, the control unit 120 sets Intra-BSS NAV on the basis of the CTS 30 in step S2112, and processing ends.

In this manner, the STA 100 can appropriately select and combine the first to third methods as necessary.

### <4. First modification>

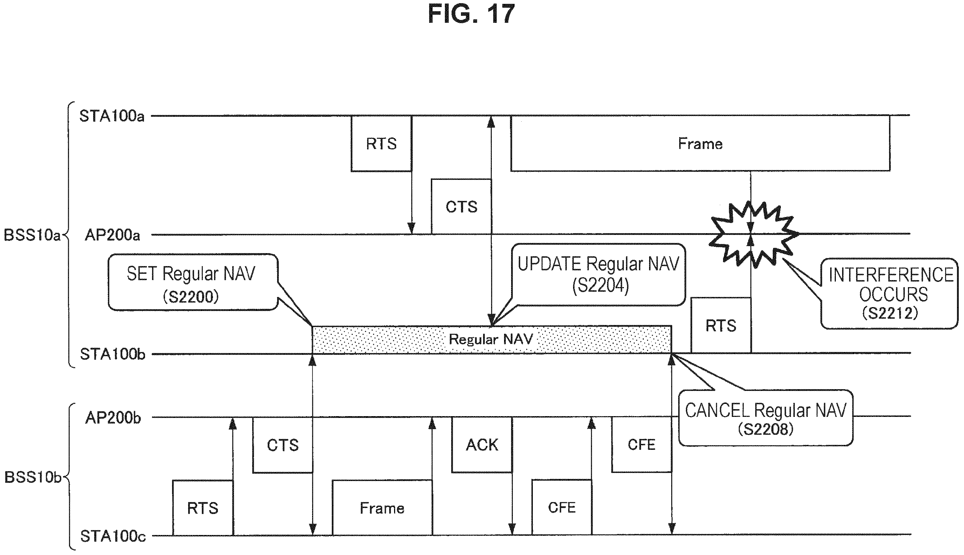

The operation of the STA 100 according to the present embodiment has been described above. Now, operation of the STA 100 according to a first modification of the present disclosure will be described with reference to FIGS. 17 to 18. The first modification is a method for reducing influence of interference that may occur in the second method described above.

If an appropriate value is not set as a predetermined threshold in the second method, interference or the like may occur. More specifically, in the case where the threshold is set to a value higher than an appropriate value, the STA 100 becomes more likely to wrongly determine that the CTS 30 transmitted from intra-BSS is not the CTS 30 transmitted from intra-BSS. In addition, in the case where the threshold is set to a value lower than an appropriate value, the STA 100 becomes more likely to wrongly determine that the CTS 30 transmitted from another BSS is the CTS 30 transmitted from intra-BSS.

Hence, description is given on an example in which interference occurs in the case where an appropriate value is not set as a predetermined threshold, with reference to FIG. 17. FIG. 17 illustrates communication between the AP 200 and the STA 100 when the predetermined threshold is set to a value higher than an appropriate value in the second method.

In step S2200, the STA 100b that has received the CTS 30 from the AP 200b confirms that reception power of the CTS 30 is equal to or less than a predetermined threshold, and sets Regular NAV. In step S2204, the STA 100b that has received the CTS 30 from the AP 200a updates Regular NAV instead of Intra-BSS NAV, because reception power of the CTS 30 is less than the predetermined threshold. After that, the STA 100b receives a CF-End from the AP 200b in step S2208, and cancels Regular NAV. In step S2212, interference may occur between the RTS 20 transmitted by the STA 1b to perform data transmission after the Regular NAV cancellation and a data frame transmitted by the STA 100a.

To reduce influence of interference that occurs in such a way, the STA 100 may decide a threshold on the basis of transmission power of a signal transmitted by the own device. For example, the STA 100 may decide a threshold on the basis of transmission power of the RTS 20 transmitted by the own device.

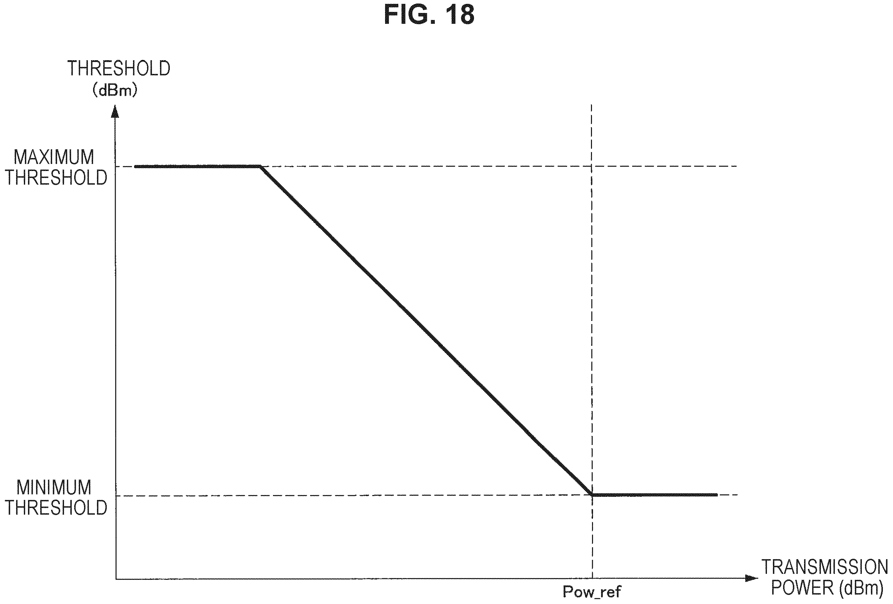

Here, a method for deciding a threshold is more specifically described with reference to FIG. 18. FIG. 18 illustrates a threshold decision example in the second method. In FIG. 18, the horizontal axis represents a value of signal transmission power (dBm) of the STA 100, and the vertical axis represents a threshold (dBm). As illustrated in FIG. 18, the STA 100 sets the threshold to be smaller as the signal transmission power of the own device is larger. In addition, although a maximum value of the threshold and a minimum value of the threshold are set in FIG. 18, the maximum value of the threshold or the minimum value of the threshold need not be set.

In the case where the threshold is decided on the basis of transmission power of a signal transmitted by the STA 100, transmission power of a signal transmitted by the STA 100 becomes lower as the threshold is set to a higher value. Consequently, even in the case where interference occurs between the RTS 20 transmitted by the STA 100b and a data frame transmitted by the STA 100a in step S2212 of FIG. 13, the degree of deterioration in communication performance due to interference may be reduced.

In this manner, the STA 100 can reduce influence of interference that may occur in the second method by deciding a threshold on the basis of signal transmission power of the STA 100.

### <5. Second modification>

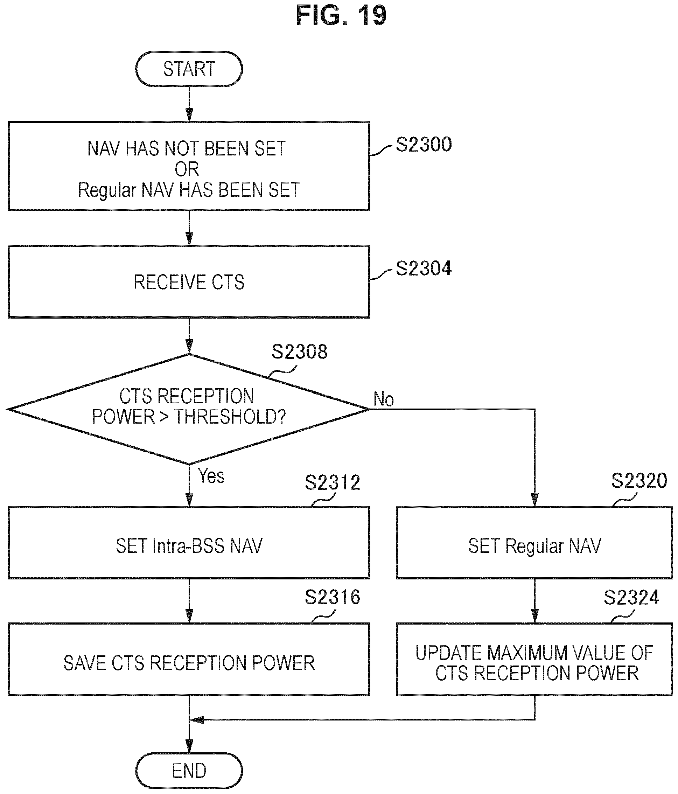

The operation of the STA 100 according to the first modification of the present disclosure has been described above. Now, operation of the STA 100 according to a second modification of the present disclosure will be described with reference to FIGS. 19 to 21.

FIG. 19 is a flowchart illustrating NAV setting operation according to the second modification, which is obtained by partially changing the flowchart of the second method illustrated in FIG. 11. FIG. 19 differs from FIG. 11 in that FIG. 19 includes an operation of "update maximum value of CTS reception power" in step S2324, which is not included in FIG. 11. In the case where the reception power of the CTS 30 is equal to or less than the predetermined threshold in step S2308 (No in step S2308), the control unit 120 determines that the CTS 30 is not a signal transmitted from intra-BSS, and sets Regular NAV in step S2320. Then, in step S2324, the control unit 120 updates a maximum value of the reception power of the CTS 30. More specifically, in the case where the CTS 30 (old CTS 30) is received, the control unit 120 causes the storage unit 130 to store reception power of the old CTS 30. Then, in the case where the new CTS 30 is received, the control unit 120 compares reception power of the new CTS 30 with the reception power of the old CTS 30 stored in the storage unit 130. After that, in the case where the reception power of the new CTS 30 is greater than the reception power of the old CTS 30, the control unit 120 causes the storage unit 130 to store the reception power information of the new CTS 30 as a maximum value of reception power of the CTS 30.

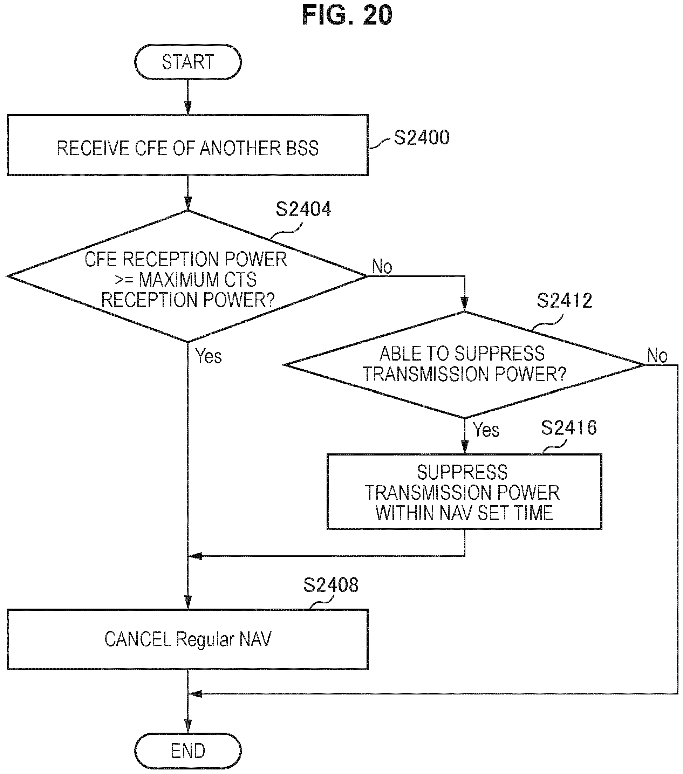

Now, operation when the STA 100 receives a CF-End will be described with reference to FIG. 20. FIG. 20 is a flowchart illustrating operation when the STA 100 receives a CF-End in the second modification.

First, in step S2400, the communication unit 110 receives a CF-End from another BSS. After that, in step S2404, the control unit 120 compares reception power of the CF-End with the maximum value of the reception power of the CTS 30 stored in step S2324 of FIG. 19. In the case where the reception power of the CF-End is equal to or greater than the maximum value of the reception power of the CTS 30 (Yes in step S2404), in step S2408, the control unit 120 cancels Regular NAV.

In the case where the reception power of the CF-End is less than the maximum value of the reception power of the CTS 30 (No in step S2404) and the STA 100 has a function of suppressing signal transmission power (Yes in step S2412), in step S2416, the control unit 120 suppresses signal transmission power. More specifically, the control unit 120 sets the signal transmission power to a low value until expected timing at which the set period of Regular NAV ends. After that, in step S2408, the control unit 120 cancels Regular NAV. In the case where the STA 100 does not have a function of suppressing signal transmission power in step S2412 (No in step S2412), the control unit 120 does not cancel Regular NAV, and processing ends. Here, in step S2416, the control unit 120 may reduce the signal transmission power to a predetermined value, or to a value determined on the basis of the maximum value of the reception power of the CTS 30, or the like.

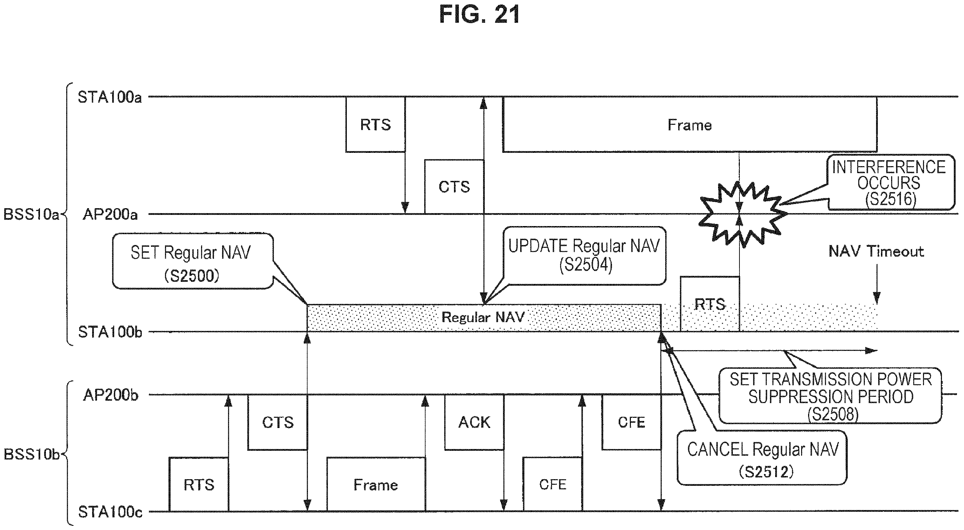

According to the present invention, FIG. 21 illustrates communication between the AP 200 and the STA 100 according to the second modification. In step S2500, the STA 100b that has received the CTS 30 from the AP 200b confirms that reception power of the CTS 30 is equal to or less than a predetermined threshold, and sets Regular NAV. In step S2504, the STA 100b that has received the CTS 30 from the AP 200a confirms that reception power of the CTS 30 is less than the predetermined threshold, and updates Regular NAV instead of setting Intra-BSS NAV. After that, in step S2512, the STA 100b receives a CF-End from the AP 200b in step S2508, confirms that the reception power of the CF-End is less than the maximum value of the reception power of the CTS 30, and sets signal transmission power to a low value. A period during which signal transmission power is set to a low value is, as described above, until expected timing at which the set period of Regular NAV ends. Then, in step S2512, the STA 100b cancels Regular NAV. Thus, even if interference occurs between the RTS 20 transmitted by the STA 100b to perform data transmission after the Regular NAV cancellation and a data frame transmitted by the STA 100a in step S2516, the degree of deterioration in communication performance due to interference may be reduced.

In this manner, the STA 100 can reduce influence of interference that may occur in the second method by setting a signal transmission power suppression period of the STA 100.

### <6. Application examples>

The technology according to the present disclosure can be applied to various products. For example, the STA 100 may be realized as mobile terminals such as smartphones, tablet personal computers (PCs), notebook PCs, portable game terminals, or digital cameras, fixed-type terminals such as television receivers, printers, digital scanners, or network storages, or car-mounted terminals such as car navigation devices. In addition, the STA 100 may be realized as terminals that perform machine to machine (M2M) communication (also referred to as machine type communication (MTC) terminals) such as smart meters, vending machines, remotely controlled monitoring devices, or point of sale (POS) terminals. Furthermore, the STA 100 may be wireless communication modules mounted in such terminals (for example, integrated circuit modules configured by one die).

On the other hand, for example, the AP 200 may be realized as a wireless LAN access point (also referred to as a wireless base station) which has a router function or does not have a router function. The AP 200 may be realized as a mobile wireless LAN router. The AP 200 may also be a wireless communication module (for example, an integrated circuit module configured with one die) mounted on such devices.

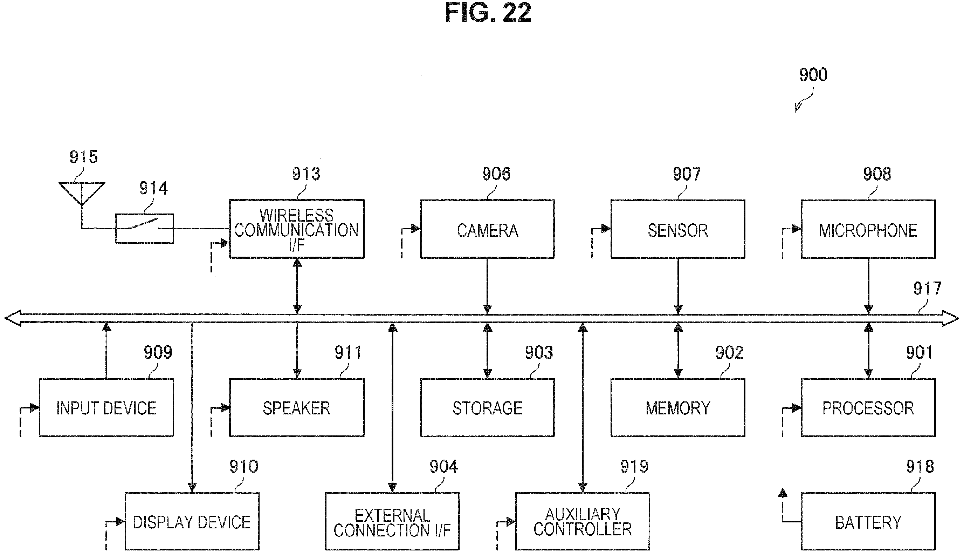

[6-1. First application example] FIG. 22 is a block diagram illustrating an example of a schematic configuration of a smartphone 900 to which the technology of the present disclosure can be applied. The smartphone 900 includes a processor 901, a memory 902, a storage 903, an external connection interface 904, a camera 906, a sensor 907, a microphone 908, an input device 909, a display device 910, a speaker 911, a wireless communication interface 913, an antenna switch 914, an antenna 915, a bus 917, a battery 918, and an auxiliary controller 919.

The processor 901 may be, for example, a central processing unit (CPU) or a system on chip (SoC), and controls functions of an application layer and other layers of the smartphone 900. The memory 902 includes random access memory (RAM) and read only memory (ROM), and stores data and programs executed by the processor 901. The storage 903 can include a storage medium such as a semiconductor memory or a hard disk. The external connection interface 904 is an interface for connecting an externally attachable device such as a memory card or a universal serial bus (USB) device to the smartphone 900.

The camera 906 has an image sensor, for example, a charge coupled device (CCD) or a complementary metal oxide semiconductor (CMOS), to generate captured images. The sensor 907 can include a sensor group including, for example, a positioning sensor, a gyro sensor, a geomagnetic sensor, an acceleration sensor, and the like. The microphone 908 converts sounds input to the smartphone 900 into audio signals. The input device 909 includes, for example, a touch sensor that detects touches on a screen of the display device 910, a key pad, a keyboard, buttons, switches, and the like, to receive operation or information input from a user. The display device 910 has a screen such as a liquid crystal display (LCD), or an organic light emitting diode (OLED) display to display output images of the smartphone 900. The speaker 911 converts audio signals output from the smartphone 900 into sounds.

The wireless communication interface 913 supports one or more wireless LAN standards of IEEE 802.11a, 11b, 11g, 11n, 11ac, and 11ad, to establish wireless communication. The wireless communication interface 913 can communicate with another device via a wireless LAN access point in an infrastructure mode. In addition, the wireless communication interface 913 can directly communicate with another device in a direct communication mode such as an ad hoc mode or Wi-Fi Direct (registered trademark). Note that, Wi-Fi Direct is different from the ad hoc mode. One of two terminals operates as an access point, and communication is performed directly between the terminals. The wireless communication interface 913 can typically include a baseband processor, a radio frequency (RF) circuit, a power amplifier, and the like. The wireless communication interface 913 may be a one-chip module on which a memory that stores a communication control program, a processor that executes the program, and a relevant circuit are integrated. The wireless communication interface 913 may support another kind of wireless communication scheme such as a cellular communication scheme, a near-field communication scheme, or a proximity wireless communication scheme in addition to the wireless LAN scheme. The antenna switch 914 switches a connection destination of the antenna 915 among a plurality of circuits (for example, circuits for different wireless communication schemes) included in the wireless communication interface 913. The antenna 915 has a single or a plurality of antenna elements (for example, a plurality of antenna elements constituting a MIMO antenna), and is used for transmission and reception of wireless signals through the wireless communication interface 913.

Note that the smartphone 900 may include a plurality of antennas (for example, antennas for a wireless LAN or antennas for a proximity wireless communication scheme, or the like), without being limited to the example of FIG. 22. In this case, the antenna switch 914 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 913, and the auxiliary controller 919 with each other. The battery 918 supplies electric power to each of the blocks of the smartphone 900 illustrated in FIG. 22 via power supply lines partially indicated by dashed lines in the drawing. The auxiliary controller 919 causes, for example, necessary minimum functions of the smartphone 900 to be operated in a sleep mode.

In the smartphone 900 illustrated in FIG. 22, the communication unit 110, and the control unit 120 described with reference to FIG. 8 may be mounted on the wireless communication interface 913. In addition, at least some of these functions may be mounted on the processor 901 or the auxiliary controller 919.

Note that the smartphone 900 may operate as a wireless access point (software AP) as the processor 901 executes the function of an access point at an application level. In addition, the wireless communication interface 913 may have the function of a wireless access point.

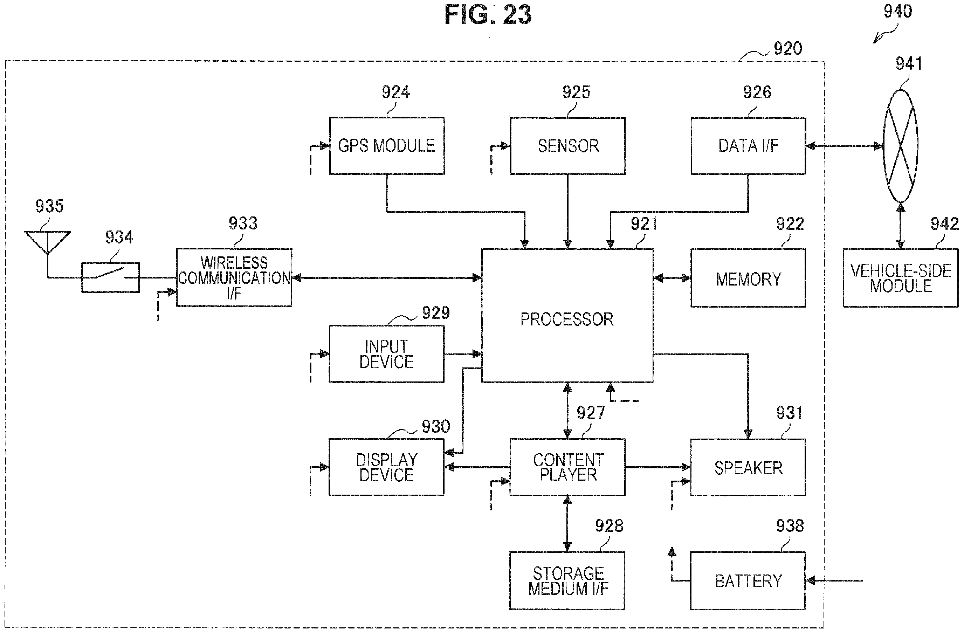

[6-2. Second application example] FIG. 23 is a block diagram illustrating an example of a schematic configuration of a car navigation device 920 to which the technology of the present disclosure can be applied. The car navigation device 920 includes a processor 921, a memory 922, a Global Positioning System (GPS) module 924, a sensor 925, a data interface 926, a content player 927, a storage medium interface 928, an input device 929, a display device 930, a speaker 931, a wireless communication interface 933, an antenna switch 934, an antenna 935, and a battery 938.

The processor 921 may be, for example, a CPU or an SoC controlling a navigation function and other functions of the car navigation device 920. The memory 922 includes RAM and ROM storing data and programs executed by the processor 921.

The GPS module 924 measures a position of the car navigation device 920 (for example, latitude, longitude, and altitude) using GPS signals received from a GPS satellite. The sensor 925 can include a sensor group including, for example, a gyro sensor, a geomagnetic sensor, a barometric sensor, and the like. The data interface 926 is connected with an in-vehicle network 941 via, for example, a terminal (not illustrated) to acquire data generated on the vehicle side such as car speed data.

The content player 927 reproduces content stored in a storage medium (for example, a CD or a DVD) inserted into the storage medium interface 928. The input device 929 includes, for example, a touch sensor that detects touches on a screen of the display device 930, buttons, switches, and the like to receive operation or information input from a user. The display device 930 has a screen such as an LCD or an OLED display to display images of the navigation function or reproduced content. The speaker 931 outputs sounds of the navigation function or reproduced content.

The wireless communication interface 933 supports one or more wireless LAN standards of IEEE 802.11a, 11b, 11g, 11n, 11ac, 11ad, and the like to execute wireless communication. The wireless communication interface 933 can communicate with another device via a wireless LAN access point in the infrastructure mode. In addition, the wireless communication interface 933 can directly communicate with another device in a direct communication mode such as an ad hoc mode or Wi-Fi Direct. The wireless communication interface 933 can typically have a baseband processor, an RF circuit, a power amplifier, and the like. The wireless communication interface 933 may be a one-chip module on which a memory that stores a communication control program, a processor that executes the program, and a relevant circuit are integrated. The wireless communication interface 933 may support another kind of wireless communication scheme such as a near-field communication scheme, a proximity wireless communication scheme, or the cellular communication scheme in addition to the wireless LAN scheme. The antenna switch 934 switches a connection destination of the antenna 935 among a plurality of circuits included in the wireless communication interface 933. The antenna 935 has a single or a plurality of antenna elements and is used for transmission and reception of wireless signals from and to the wireless communication interface 933.

Note that the car navigation device 920 may include a plurality of antennas, without being limited to the example of FIG. 23. In this case, the antenna switch 934 may be omitted from the configuration of the car navigation device 920.

The battery 938 supplies electric power to each of the blocks of the car navigation device 920 illustrated in FIG. 23 via power supply lines partially indicated by dashed lines in the drawing. In addition, the battery 938 accumulates electric power supplied from the vehicle side.

In the car navigation device 920 illustrated in FIG. 23, the communication unit 110, and the control unit 120 described with reference to FIG. 8 may be mounted on the wireless communication interface 933. In addition, at least some of these functions may be mounted on the processor 921.

In addition, the wireless communication interface 933 may operate as the AP 200 described above, and provide wireless communication for a terminal of a user on the vehicle.

Further, the technology of the present disclosure may be realized as an in-vehicle system (or a vehicle) 940 including one or more blocks of the above-described car navigation device 920, the in-vehicle network 941, and a vehicle-side module 942. The vehicle-side module 942 generates vehicle-side data such as a vehicle speed, the number of engine rotations, or failure information and outputs the generated data to the in-vehicle network 941.

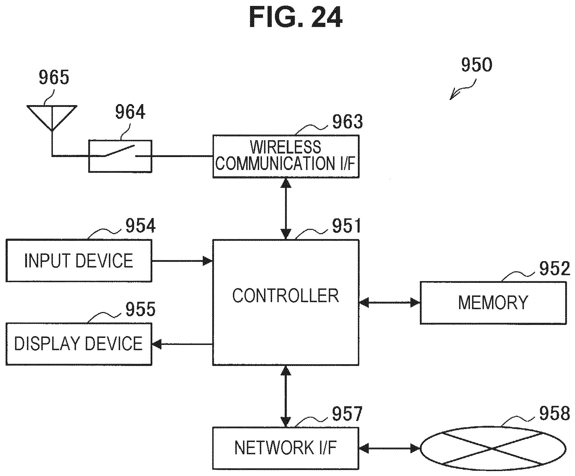

[6-3. Third application example] FIG. 24 is a block diagram illustrating an example of a schematic configuration of a wireless access point 950 to which the technology of the present disclosure can be applied. The wireless access point 950 includes a controller 951, a memory 952, an input device 954, a display device 955, a network interface 957, a wireless communication interface 963, an antenna switch 964, and an antenna 965.

The controller 951 may be, for example, a CPU or a digital signal processor (DSP) and operates various functions (for example, access limitation, routing, encryption, a fire wall, and log management) of the Internet Protocol (IP) layer and higher layers of the wireless access point 950. The memory 952 includes RAM and ROM and stores a program executed by the controller 951 and various kinds of control data (for example, a terminal list, a routing table, an encryption key, security settings, and a log).

The input device 954 includes, for example, a button or a switch, and receives operation performed by a user. The display device 955 includes an LED lamp and displays an operation status of the wireless access point 950.

The network interface 957 is a wired communication interface that connects the wireless access point 950 with a wired communication network 958. The network interface 957 may include a plurality of connection terminals. The wired communication network 958 may be a LAN such as Ethernet (registered trademark) or may be a wide area network (WAN).

The wireless communication interface 963 supports one or more wireless LAN standards of IEEE 802.11a, 11b, 11g, 11n, 11ac, 11ad, and the like to supply wireless connection to a nearby terminal as an access point. The wireless communication interface 963 can typically include a baseband processor, an RF circuit, and a power amplifier. The wireless communication interface 963 may be a one-chip module in which memory storing a communication control program, a processor executing the program, and relevant circuits are integrated. The antenna switch 964 switches a connection destination of the antenna 965 among a plurality of circuits included in the wireless communication interface 963. The antenna 965 includes one antenna element or a plurality of antenna elements and is used to transmit and receive a wireless signal through the wireless communication interface 963.

### <7. Conclusion>

As described above, in the first method, the STA 100 of the wireless LAN system according to the present embodiment can determine whether or not the CTS 30 is a signal transmitted from intra-BSS by comparing the receiving station address 33 of the CTS 30 with the transmitting station address 24 of the RTS 20. In the second method, the STA 100 can perform the determination by setting an appropriate value as a predetermined threshold, and comparing reception power of the CTS 30 with the threshold. In the third method, the STA 100 can determine which of the old CTS 30 and the new CTS 30 is a signal transmitted from intra-BSS by comparing reception power of the old CTS 30 with reception power of the new CTS 30. Then, even if a wrong determination is made that the old CTS 30 is a signal transmitted from intra-BSS, the STA 100 can recognize the wrong determination and correct NAV setting in the case of receiving the new CTS 30.

In addition, in the first modification, the STA 100 can reduce influence of interference that may occur in the second method by deciding a threshold on the basis of signal transmission power of the STA 100. In the second modification, the STA 100 can reduce influence of the interference by setting a signal transmission power suppression period of the STA 100.

Note that in the present disclosure, the STA 100 and the AP 200 according to the present embodiment may be implemented so as to have compatibility with an STA and an AP using a conventional method.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, steps in the operation of the STA 100 according to the present embodiment need not be always processed in chronological order in accordance with the order described as a flow chart. For example, steps in the processing of the STA 100 may be processed in an order different from the order described as a flow chart, or may be concurrently processed.

In addition, some functions of the STA 100 may be implemented by the control unit 120. That is, the control unit 120 may implement some functions of the communication unit 110.

Further, the effects described in this specification are merely illustrative or exemplified effects, and are not limitative. That is, with or in the place of the above effects, the technology according to the present disclosure may achieve other effects that are clear to those skilled in the art from the description of this specification.

### Reference Signs List

- 10: BSS
- 20: RTS
- 30: CTS
- 100: STA
- 110: communication unit
- 120: control unit
- 130: storage unit
- 200: AP

## Claims

1. A station device (100) comprising:
a communication unit (110) configured to receive a response frame not including information indicating a transmission source; and
a control unit (120) configured to determine whether or not the response frame is a frame transmitted from another device belonging to a same network as the station device (100), on a basis of information regarding the response frame;
wherein the information regarding the response frame is information regarding reception power of the response frame;
**characterized in that** the control unit (120) is configured to determine that the response frame is a frame transmitted from another device belonging to the same network as the station device (100) in a case where the reception power is greater than a threshold;
wherein the control unit (120) is configured to set a first transmission suppression period for the same network as the station device (100) in a case of determining that the response frame is a frame transmitted from another device belonging to the same network as the station device (100), and to set a second transmission suppression period for another network in a case of determining that the response frame is not a frame transmitted from another device belonging to the same network as the station device (100);
wherein the communication unit (110) is configured to receive a CF-End frame, and
the control unit (120) is configured to end one of the first transmission suppression period and the second transmission suppression period on a basis of reception of the CF-End frame;
wherein, in a case where reception power of the CF-End frame that is received during the second transmission suppression period set on a basis of one or more previously received response frames is less than a maximum value of reception power of the one or more previously received response frames, the control unit (120) is configured to reduce transmission power of a signal transmitted by the station device (100), and to cancel the second transmission suppression period.

2. The station device (100) according to claim 1, wherein the threshold is set on a basis of transmission power of a signal transmitted by the station device (100).

3. The station device (100) according to claim 2, wherein the threshold is set to be smaller as the transmission power is larger.

4. The station device (100) according to claim 1, wherein the information regarding the response frame is information regarding a reception device of the response frame.

5. The station device (100) according to claim 4, wherein the response frame is a CTS frame; and wherein
the communication unit (110) receives an RTS frame, and
the control unit (120) determines that the CTS frame is a frame transmitted from another device belonging to the same network as the station device (100) in a case where a reception device of the CTS frame is same as a transmission device of the RTS frame.

6. The station device (100) according to claim 1 or 5, wherein,
a) in a case where reception power of a subsequent response frame that is received during the first transmission suppression period set on a basis of a previously received response frame is greater than reception power of the previously received response frame, the control unit (120) changes the first transmission suppression period set by the previously received response frame to the second transmission suppression period, and sets the first transmission suppression period by the subsequent response frame and/or
b) in a case where reception power of a subsequent response frame that is received during the first transmission suppression period set on a basis of a previously received response frame is equal to or less than reception power of the previously received response frame, the control unit (120) sets the second transmission suppression period by the subsequent response frame.

7. The station device (100) according to claim 1,wherein the control unit (120) reduces the transmission power during a period that is decided on a basis of duration information included in the one or more previously received response frames.

8. A wireless control method performed by a station device, comprising:
receiving a response frame; and
determining whether or not the response frame is a frame transmitted from another device belonging to a same network as the station device (100), on a basis of information regarding the response frame;
wherein the information regarding the response frame is information regarding reception power of the response frame;
**characterized by** determining that the response frame is a frame transmitted from another device belonging to the same network as the station device (100) in a case where the reception power is greater than a threshold;
setting a first transmission suppression period for the same network as the station device (100) in a case of determining that the response frame is a frame transmitted from another device belonging to the same network as the station device (100), and setting a second transmission suppression period for another network in a case of determining that the response frame is not a frame transmitted from another device belonging to the same network as the station device (100);
receiving a CF-End frame, and
ending one of the first transmission suppression period and the second transmission suppression period on a basis of reception of the CF-End frame;
wherein, in a case where reception power of the CF-End frame that is received during the second transmission suppression period set on a basis of one or more previously received response frames is less than a maximum value of reception power of the one or more previously received response frames, reducing transmission power of a signal transmitted by the station device (100), and canceling the second transmission suppression period.

9. A program causing a computer to implement the wireless control method according to claim 8, when executed on a station device.

## Patentansprüche

1. Stationsvorrichtung (100), umfassend:
eine Kommunikationseinheit (110), die dazu ausgelegt ist, einen Antwortrahmen zu empfangen, der keine Informationen aufweist, die eine Sendequelle angeben; und
eine Steuereinheit (120), die dazu ausgelegt ist, basierend auf Informationen bezüglich des Antwortrahmens zu bestimmen, ob der Antwortrahmen ein aus einer anderen Vorrichtung, die zu demselben Netzwerk wie die Stationsvorrichtung (100) gehört, gesendeter Rahmen ist oder nicht;
wobei die Informationen bezüglich des Antwortrahmens Informationen bezüglich der Empfangsleistung des Antwortrahmens sind;
**dadurch gekennzeichnet, dass** die Steuereinheit (120) dazu ausgelegt ist, zu bestimmen, dass der Antwortrahmen ein Rahmen ist, der aus einer anderen Vorrichtung, die zu demselben Netzwerk wie die Stationsvorrichtung (100) gehört, in einem Fall gesendet wird, in dem die Empfangsleistung größer als ein Schwellenwert ist;
wobei die Steuereinheit (120) dazu ausgelegt ist, eine erste Sendeunterdrückungszeitspanne für dasselbe Netzwerk wie die Stationsvorrichtung (100) in einem Fall des Bestimmens festzulegen, dass der Antwortrahmen ein Rahmen ist, der aus einer anderen Vorrichtung gesendet wird, die zu demselben Netzwerk wie die Stationsvorrichtung (100) gehört, und eine zweite Sendeunterdrückungszeitspanne für ein anderes Netzwerk in einem Fall des Bestimmens festzulegen, dass der Antwortrahmen nicht ein Rahmen ist, der aus einer anderen Vorrichtung gesendet wird, die zu demselben Netzwerk wie die Stationsvorrichtung (100) gehört;
wobei die Kommunikationseinheit (110) dazu ausgelegt ist, einen CG-Ende-Rahmen zu empfangen, und die Steuereinheit (120) dazu ausgelegt ist, eine von der ersten Sendeunterdrückungszeitspanne und der zweiten Sendeunterdrückungszeitspanne basierend auf dem Empfang des CF-Ende-Rahmens zu beenden;
wobei in einem Fall, in dem die Empfangsleistung des CF-Ende-Rahmens, der während der zweiten Sendeunterdrückungszeitspanne empfangen wird, die basierend auf einem oder mehreren zuvor empfangenen Antwortrahmen festgelegt wird, kleiner als ein Maximalwert der Empfangsleistung des einen oder der mehreren zuvor empfangenen Antwortrahmen ist, die Steuereinheit (120) dazu ausgelegt ist, die Sendeleistung eines durch die Stationsvorrichtung (100) gesendeten Signals zu reduzieren und die zweite Sendeunterdrückungszeitspanne aufzuheben.

2. Stationsvorrichtung (100) gemäß Anspruch 1, wobei der Schwellenwert basierend auf der Sendeleistung eines durch die Stationsvorrichtung (100) gesendeten Signals festgelegt wird.

3. Stationsvorrichtung (100) gemäß Anspruch 2, wobei der Schwellenwert mit zunehmender Sendeleistung kleiner festgelegt wird.

4. Stationsvorrichtung (100) gemäß Anspruch 1, wobei die Informationen bezüglich des Antwortrahmens Informationen bezüglich einer Empfangsvorrichtung des Antwortrahmens sind.

5. Stationsvorrichtung (100) gemäß Anspruch 4, wobei der Antwortrahmen ein CTS-Rahmen ist; und wobei
die Kommunikationseinheit (110) einen RTS-Rahmen empfängt und die Steuereinheit (120) bestimmt, dass der CTS-Rahmen ein Rahmen ist, der aus einer anderen Vorrichtung, die zu demselben Netzwerk wie die Stationsvorrichtung (100) gehört, in einem Fall gesendet wird, in dem eine Empfangsvorrichtung des CTS-Rahmens dieselbe wie eine Sendevorrichtung des RTS-Rahmens ist.

6. Stationsvorrichtung (100) gemäß Anspruch 1 oder 5, wobei
a) in einem Fall, in dem die Empfangsleistung eines nachfolgenden Antwortrahmens, der während der ersten Sendeunterdrückungszeitspanne empfangen wird, die basierend auf einem zuvor empfangenen Antwortrahmen festgelegt wurde, größer als die Empfangsleistung des zuvor empfangenen Antwortrahmens ist, die Steuereinheit (120) die erste Sendeunterdrückungszeitspanne, die durch den zuvor empfangenen Antwortrahmen festgelegt wurde, auf die zweite Sendeunterdrückungszeitspanne ändert und die erste Sendeunterdrückungszeitspanne durch den nachfolgenden Antwortrahmen festlegt, und/oder
b) in einem Fall, in dem die Empfangsleistung eines nachfolgenden Antwortrahmens, der während der ersten Sendeunterdrückungszeitspanne empfangen wird, die basierend auf einem zuvor empfangenen Antwortrahmen festgelegt wurde, gleich oder kleiner als die Empfangsleistung des zuvor empfangenen Antwortrahmens ist, die Steuereinheit (120) den zweiten Sendeunterdrückungszeitspanne durch den nachfolgenden Antwortrahmen festlegt.

7. Stationsvorrichtung (100) gemäß Anspruch 1, wobei die Steuereinheit (120) die Sendeleistung während einer Zeitspanne reduziert, die basierend auf einer Dauerangabe entschieden wird, die in dem einen oder den mehreren zuvor empfangenen Antwortrahmen enthalten sind.

8. Drahtlossteuerungsverfahren, das durch eine Stationsvorrichtung durchgeführt wird, umfassend:
Empfangen eines Antwortrahmens; und
Bestimmen basierend auf Informationen bezüglich des Antwortrahmens, ob der Antwortrahmen ein aus einer anderen Vorrichtung, die zu demselben Netzwerk wie die Stationsvorrichtung (100) gehört, gesendeter Rahmen ist oder nicht;
wobei die Informationen bezüglich des Antwortrahmens Informationen bezüglich der Empfangsleistung des Antwortrahmens sind;
**gekennzeichnet durch** Bestimmen, dass der Antwortrahmen ein Rahmen ist, der aus einer anderen Vorrichtung, die zu demselben Netzwerk wie die Stationsvorrichtung (100) gehört, in einem Fall gesendet wird, in dem die Empfangsleistung größer als ein Schwellenwert ist;
Festlegen einer ersten Sendeunterdrückungszeitspanne für dasselbe Netzwerk wie die Stationsvorrichtung (100) in einem Fall des Bestimmens, dass der Antwortrahmen ein Rahmen ist, der aus einer anderen Vorrichtung gesendet wird, die zu demselben Netzwerk wie die Stationsvorrichtung (100) gehört, und Festlegen einer zweiten Sendeunterdrückungszeitspanne für ein anderes Netzwerk in einem Fall des Bestimmens, dass der Antwortrahmen nicht ein Rahmen ist, der aus einer anderen Vorrichtung gesendet wird, die zu demselben Netzwerk wie die Stationsvorrichtung (100) gehört;
Empfangen eines CF-Ende-Rahmens, und
Beenden einer von der ersten Sendeunterdrückungszeitspanne und der zweiten Sendeunterdrückungszeitspanne basierend auf dem Empfang des CF-Ende-Rahmens;
wobei in einem Fall, in dem die Empfangsleistung des CF-Ende-Rahmens, der während der zweiten Sendeunterdrückungszeitspanne empfangen wird, die basierend auf einem oder mehreren zuvor empfangenen Antwortrahmen festgelegt wird, kleiner als ein Maximalwert der Empfangsleistung des einen oder der mehreren zuvor empfangenen Antwortrahmen ist, die Sendeleistung eines durch die Stationsvorrichtung (100) gesendeten Signals reduziert wird und die zweite Sendeunterdrückungszeitspanne aufgehoben wird.

9. Programm, das einen Computer veranlasst, beim Ausführen auf einer Stationsvorrichtung das Drahtlossteuerungsverfahren gemäß Anspruch 8 durchzuführen.

## Revendications

1. Dispositif de station (100) comprenant :
une unité de communication (110) configurée pour recevoir une trame de réponse ne comprenant pas d'informations indiquant une source d'émission ; et
une unité de commande (120) configurée pour déterminer si la trame de réponse est ou non une trame émise depuis un autre dispositif appartenant à un même réseau que le dispositif de station (100), sur la base d'informations relatives à la trame de réponse ;
dans lequel les informations relatives à la trame de réponse sont des informations relatives à une puissance de réception de la trame de réponse ;
**caractérisé en ce que** l'unité de commande (120) est configurée pour déterminer que la trame de réponse est une trame émise depuis un autre dispositif appartenant au même réseau que le dispositif de station (100) dans un cas où la puissance de réception est supérieure à un seuil ;
dans lequel l'unité de commande (120) est configurée pour définir une première période de suppression d'émission pour le même réseau que le dispositif de station (100) dans un cas d'une détermination établissant que la trame de réponse est une trame émise depuis un autre dispositif appartenant au même réseau que le dispositif de station (100), et pour définir une seconde période de suppression d'émission pour un autre réseau dans un cas d'une détermination établissant que la trame de réponse n'est pas une trame émise depuis un autre dispositif appartenant au même réseau que le dispositif de station (100) ;
dans lequel l'unité de communication (110) est configurée pour recevoir une trame CF-End, et
l'unité de commande (120) est configurée pour mettre fin à l'une de la première période de suppression d'émission et de la seconde période de suppression d'émission sur la base d'une réception de la trame CF-End ;
dans lequel, dans un cas où une puissance de réception de la trame CF-End qui est reçue pendant la seconde période de suppression d'émission définie sur la base d'une ou plusieurs trames de réponse reçues précédemment est inférieure à une valeur maximale d'une puissance de réception de la ou des trames de réponse reçues précédemment, l'unité de commande (120) est configurée pour réduire la puissance d'émission d'un signal émis par le dispositif de station (100), et pour annuler la seconde période de suppression d'émission.

2. Dispositif de station (100) selon la revendication 1, dans lequel le seuil est défini sur la base d'une puissance d'émission d'un signal émis par le dispositif de station (100).

3. Dispositif de station (100) selon la revendication 2, dans lequel le seuil est défini pour être plus petit à mesure que la puissance d'émission augmente.

4. Dispositif de station (100) selon la revendication 1, dans lequel les informations relatives à la trame de réponse sont des informations relatives à un dispositif de réception de la trame de réponse.

5. Dispositif de station (100) selon la revendication 4, dans lequel la trame de réponse est une trame CTS ; et dans lequel
l'unité de communication (110) reçoit une trame RTS, et
l'unité de commande (120) détermine que la trame CTS est une trame émise depuis un autre dispositif appartenant au même réseau que le dispositif de station (100) dans un cas où un dispositif de réception de la trame CTS est identique à un dispositif d'émission de la trame RTS.

6. Dispositif de station (100) selon la revendication 1 ou 5, dans lequel,
a) dans un cas où une puissance de réception d'une trame de réponse ultérieure qui est reçue pendant la première période de suppression d'émission définie sur la base d'une trame de réponse reçue précédemment est supérieure à une puissance de réception de la trame de réponse reçue précédemment, l'unité de commande (120) remplace la première période de suppression d'émission définie par la trame de réponse reçue précédemment par la seconde période de suppression d'émission, et définit la première période de suppression d'émission par la trame de réponse ultérieure et/ou
b) dans un cas où une puissance de réception d'une trame de réponse ultérieure qui est reçue pendant la première période de suppression d'émission définie sur la base d'une trame de réponse reçue précédemment est égale ou inférieure à une puissance de réception de la trame de réponse reçue précédemment, l'unité de commande (120) définit la seconde période de suppression d'émission par la trame de réponse ultérieure.

7. Dispositif de station (100) selon la revendication 1, dans lequel l'unité de commande (120) réduit la puissance d'émission pendant une période qui est décidée sur la base d'informations de durée incluses dans la ou les trames de réponse reçues précédemment.

8. Procédé de commande sans fil exécuté par un dispositif de station, comprenant :
la réception d'une trame de réponse ; et
la détermination établissant si la trame de réponse est ou non une trame émise depuis un autre dispositif appartenant à un même réseau que le dispositif de station (100), sur la base d'informations relatives à la trame de réponse ;
dans lequel les informations relatives à la trame de réponse sont des informations relatives à une puissance de réception de la trame de réponse ;
**caractérisé par** la détermination établissant que la trame de réponse est une trame émise depuis un autre dispositif appartenant au même réseau que le dispositif de station (100) dans un cas où la puissance de réception est supérieure à un seuil ;
la définition d'une première période de suppression d'émission pour le même réseau que le dispositif de station (100) dans un cas d'une détermination établissant que la trame de réponse est une trame émise depuis un autre dispositif appartenant au même réseau que le dispositif de station (100), et la définition d'une seconde période de suppression d'émission pour un autre réseau dans un cas d'une détermination établissant que la trame de réponse n'est pas une trame émise depuis un autre dispositif appartenant au même réseau que le dispositif de station (100) ;
la réception d'une trame CF-End, et
la fin d'une de la première période de suppression d'émission et de la seconde période de suppression d'émission sur la base d'une réception de la trame CF-End ;
dans lequel, dans un cas où une puissance de réception de la trame CF-End qui est reçue pendant la seconde période de suppression d'émission définie sur la base d'une ou plusieurs trames de réponse reçues précédemment est inférieure à une valeur maximale d'une puissance de réception de la ou des trames de réponse reçues précédemment, la réduction d'une puissance d'émission d'un signal émis par le dispositif de station (100), et l'annulation de la seconde période de suppression d'émission.

9. Programme amenant un ordinateur à implémenter le procédé de commande sans fil selon la revendication 8, lorsqu'il est exécuté sur un dispositif de station.
